(19) Europäisches Patentamt / European Patent Office / Office européen des brevets

(11) **EP 3 139 009 B1**

(12) **EUROPEAN PATENT SPECIFICATION**

(45) Date of publication and mention
of the grant of the patent:
**28.10.2020 Bulletin 2020/44**

(51) Int Cl.:
*F01N 3/04* (2006.01)    *B01D 53/18* (2006.01)
*B01D 53/50* (2006.01)    *B01D 53/94* (2006.01)
*F01N 3/01* (2006.01)    *F01N 3/02* (2006.01)
*F01N 3/08* (2006.01)    *F01N 3/24* (2006.01)
*F02M 26/00* (2016.01)    *F01N 3/20* (2006.01)
*F01N 13/00* (2010.01)    *F01N 3/027* (2006.01)

(21) Application number: **15776956.3**

(22) Date of filing: **07.04.2015**

(86) International application number:
**PCT/JP2015/060879**

(87) International publication number:
**WO 2015/156290 (15.10.2015 Gazette 2015/41)**

(54) **EXHAUST GAS PURIFICATION DEVICE FOR MARINE DIESEL ENGINE THAT USES LOW-QUALITY FUEL CONTAINING HIGH CONCENTRATION OF SULFUR COMPONENT**

ABGASREINIGUNGSVORRICHTUNG FÜR EINEN SCHIFFSDIESELMOTOR MIT MINDERWERTIGEM BRENNSTOFF MIT HOHEM SCHWEFELGEHALT

DISPOSITIF D'ÉPURATION DE GAZ D'ÉCHAPPEMENT POUR MOTEUR DIESEL MARIN UTILISANT UN CARBURANT DE BASSE QUALITÉ CONTENANT UNE CONCENTRATION ÉLEVÉE DE CONSTITUANT SOUFRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.04.2014 JP 2014078832**

(43) Date of publication of application:
**08.03.2017 Bulletin 2017/10**

(73) Proprietor: **Usui Kokusai Sangyo Kaisha Ltd.**
**Shizuoka 411-8610 (JP)**

(72) Inventors:
• **FURUGEN, Munekatsu**
**Nishinomiya-shi**
**Hyogo 662-0875 (JP)**
• **MAKINO, Tadashi**
**Takatsuki-shi**
**Osaka 569-1020 (JP)**
• **TAKAHASHI, Teruhisa**
**Sunto-gun**
**Shizuoka 411-8610 (JP)**
• **TAKIKAWA, Kazunori**
**Numazu-shi**
**Shizuoka 410-0037 (JP)**

(74) Representative: **Hoppe, Lars**
**VKK Patentanwälte PartG mbB**
**Edisonstraße 2**
**87437 Kempten (DE)**

(56) References cited:
**EP-A1- 2 653 679**    **WO-A1-2010/020684**
**JP-A- 2003 126 690**    **JP-A- 2009 050 751**
**JP-A- 2009 050 751**    **JP-A- 2012 140 928**
**JP-A- 2013 188 708**    **JP-A- 2013 188 708**
**JP-A- 2014 098 340**    **JP-U- S5 176 541**

## Description

Technical Field

The present invention relates to an exhaust gas treatment technique for a large-displacement marine diesel engine using low-quality fuel such as fuel oil particularly containing high-concentration sulfur components [while fuel oil is represented as Diesel Oil (DO), Marine Diesel Fuel (MDF) or Marine Diesel Oil (MDO), Marine Fuel Oil (MFO), Heavy Fuel Oil (HFO), and Residual Fuel Oil (RFO) in ship industries, these representations are hereinafter collectively referred to as "fuel oil" in the present invention] for ships, electric power generation, industries, and so forth, the treatment for removing harmful gas, such as sulfur oxides, contained in exhaust gas of a marine diesel engine for purification. In particular, the present invention relates to an exhaust gas purification equipment in a large-displacement marine diesel engine that discharges high-temperature exhaust gas in which a selective catalytic reduction device (hereinafter, referred to as "SCR") and a scrubber, in which a difference in diffusion speeds between gas and particles is utilized and the exhaust gas hardly collides fiercely with a surface of a thin-film layer formed of treatment water flowing down along each of wall surfaces constituting the scrubber but the exhaust gas smoothly flows along neart the surface of the water thin-film layer, are disposed.

Background Art

As a motive power source for various ships, electric power generators, large construction machines and, furthermore, various automobiles, and so forth, diesel engines have been widely adopted. Particulate matter (hereinafter referred to as "PM") mainly including carbon, sulfur oxides (hereinafter referred to as "SOx") and nitrogen oxides (hereinafter referred to as "NOx" contained in exhaust gas discharged from the diesel engines not only cause air pollution as well known, but also are substances extremely hazardous to human bodies. Therefore, purification of the exhaust gas is extremely important. Thus, many suggestions have already been made, such as an improvement of a diesel engine combustion system, adoption of various exhaust gas filters, an exhaust gas recirculation (hereinafter referred to as "EGR") method, an exhaust gas purification method using "SCR", and an electrical treatment method using corona discharge, and some of such suggestions have been partially put into practical use.

Here, PM (particulate matter) components in exhaust gas of a diesel engine are classified into two, that is, soluble organic fractions (hereinafter referred to as "SOF") and insoluble organic fractions (hereinafter referred to as "ISF"). Of these, the SOF components have unburned components of fuel and lubricant oil as main components that include harmful substances such as carcinogenic polycyclic aromatics. On the other hand, the ISF components have low-electrical-resistivity carbon (soot) and sulfate components as main components, and due to influences of these SOF components and ISF components on human bodies and environments, exhaust gas in which those components are reduced as much as possible is desired. In particular, it is said that the degree of adverse effects of PM on living bodies are particularly problematic when the particle diameter is of a nanometer size.

As the electrical treatment method using corona discharge, for example, a method and device described below (Patent Literatures 1 and 2) have been proposed.

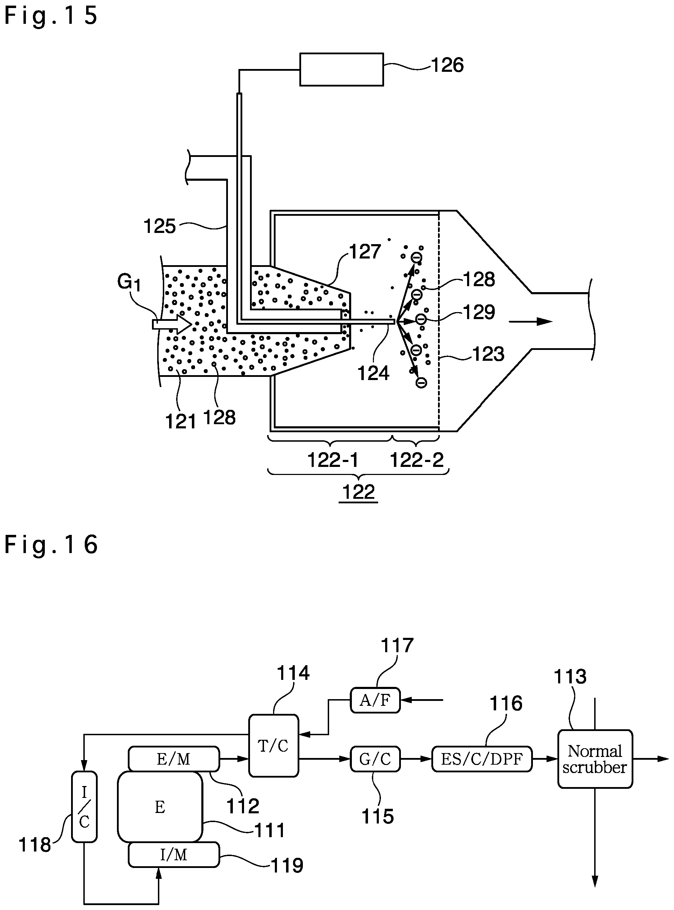

In Patent Literature 1, as schematically described in Figure 15, the Applicant of the present application has suggested an electrical treatment method and device for exhaust gas of a diesel engine, wherein a discharging/charging unit 122 formed of a corona discharging unit 122-1 and a charging unit 122-2 is installed in an exhaust gas passage 121 so as to charge PM 128 in exhaust gas G1 having carbon as a main component with corona-discharged electrons 129, and the charged PM 128 is collected by a collection plate 123 disposed in the exhaust gas passage 121, and the method and device having the configuration is designed such that an electrode needle 124 in the discharging/charging unit 122 has a short length in a flowing direction of an exhaust gas flow, and the collection plate 123 is disposed in a direction perpendicular to the flowing direction of the exhaust gas flow. In Figure 15, the reference numeral 125 denotes a seal gas pipe, 126 denotes a high-voltage power supply device, and 127 denotes an exhaust gas induction pipe.

Also, in the first example of Patent Literature 2, as schematically described in Figure 16, the Applicant has suggested an exhaust gas purification equipment for a marine diesel engine that has a configuration in which an exhaust gas cooler (G/C) 115 that is disposed downstream of a turbine (not depicted) of a turbocharger (T/C) 114 of an exhaust pipe located downstream from an exhaust manifold (E/M) 112 of a diesel engine (E) 111 using low-quality fuel such as fuel oil containing high-concentration sulfur components as fuel, an electrostatic cyclone exhaust gas purification equipment (ESP/C/DPF (Diesel Particulate Filter) hereinafter referred to as "ESP/C/DPF") 116 is further disposed downstream from the exhaust gas cooler (G/C) 115, and a scrubber (hereinafter referred to as an "NS scrubber") 113 which dissolves SOx in the exhaust gas into its treatment water but hardly dissolves or removes PM into or from the treatment water and is disposed on a downstream-side piping so that outside air is sucked into an intake pipe located on the downstream side of the air filter (A/F) 117 via a compressor (not depicted) of the turbocharger (T/C) 114 and an intercooler (I/C) 118 so as to be further sucked into an intake manifold (I/M) 119 of the engine.

Note that, in some cases, exhaust gas is discharged without being treated at all, as depicted in Fig. 16 relating to Patent Literature 2. Further exhaust gas aftertreatment devices for SCR and PM removal can be found in PTL3, PTL4, PTL5 or PTL 6.

On the other hand, Non-Patent Literature 1 defines, in Chapter 3 "Requirements for machinery spaces of all ships", Part C "Control of discharge of oil", Regulation 15 "Control of discharge of oil", oil concentrations of the oily mixture without dilution outside and inside special sea areas.

Also, Non-Patent Literature 2 suggests a technique of equipping a container ship with a diesel engine in which EGR gas branching from an exhaust pipe to a turbine of a turbocharger is purified by a scrubber and then cooled by an EGR cooler, and further made to pass through a droplets collector, and then recirculated by an EGR blower to an intercooler for intake air pressure-fed from a compressor of the turbocharger, in chapter 2 "Countermeasure technique to IMO Tier III NOx Regulations and Remaining Problem", 2-2 "Countermeasure Engine Technique to IMO Tier III NOx regulations", 2-2-2 "Exhaust Gas Circulation", pp. 14-16. Here, IMO in Non-Patent Literature 2 is an abbreviation of the International Maritime Organization.

Non-Patent Literature 3 has introduced a technology, as an example of $SO_x$-compliant technology using a two-stroke engine made by MAN B&W with an output of 21,000 kW equipped on Ficaria Seaways of Demark by Alfa Laval, in which, by a treatment by a scrubber for exhaust gas using seawater or fresh water depending on the situation while fuel oil with a sulfur content of 2.2 percent is being used, cleaning and removal are performed to a level at the time of using fuel oil with a sulfur content of 0.1 percent in exhaust gas, which is a required level scheduled to come into force in 2015 by IMO (International Maritime Organization).

Citation List

Patent Literature

    PTL 1: WO2006/064805
    PTL 2: Japanese Patent Application No. 2013-94390
    PTL 3: JP 2013 188708 A
    PTL 4: WO 2010 / 020684 A1
    PTL 5: EP 2653679 A1
    PTL 6: JP 2009050751

Non-Patent Literature

    NPTL 1: International Convention for Prevention of Pollution from Ships, 1973, Annex I "Regulation for prevention of pollution by oil"
    NPTL 2: Report on examination and research on reduction technique of air pollutants emitted from watercrafts, 2009 edited by The Japan Institute of Marine Engineering
    NPTL 3: "Wave of clean solutions", Alfa Laval International Magazine "here" No. 30, pp. 6-14 issued on November 30, 2011

Summary of Invention

Technical Problem

However, the conventional diesel engine exhaust gas purification equipments described above have the following problems and challenges.

In the exhaust gas treatment technology for a diesel engine that electrically treats PM in exhaust gas using corona discharge or the like described in Patent Literature 1 (for example, an electrical treatment method and device for exhaust gas of a diesel engine depicted in Figure 15), the following problems arise.

That is, in marine diesel engines, for example, in the case when the exhaust gas purification equipment described in Patent Literature 1 is used for a large-displacement marine diesel engine which has a significantly large displacement compared with automobile diesel engines using diesel fuel with less content of sulfur components, and uses low-quality fuel such as fuel oil containing high-concentration sulfur components (fuel oil contains sulfur components 500 to 3500 times as much as diesel fuel: according to JIS K2204: 2007 "Diesel Fuel"; 0.0010 percent by mass or lower, and according to K2205-1990 "Fuel Oil"; 0.5 percent by mass to 3.5 percent by mass or lower), it is required to overcome a problem in which the sulfur components in the low-quality fuel such as fuel oil containing high-concentration sulfur components become sulfate in exhaust gas and EGR gas, thereby corroding engine components, in particular, exhaust-related components. Moreover, $SO_x$ based on sulfur components cannot be collected at all.

Also, in the electrical treatment method and device for exhaust gas (Figure 16) of a large-displacement diesel engine which particularly uses low-quality fuel such as fuel oil containing high-concentration sulfur components and from which high-speed and/or large-flow-rate exhaust gas is discharged, described in Patent Literature 2 mentioned above (previously suggested by the Applicant of the present application), with a turbine wheel (not depicted) of a turbocharger (T/C) 114 being driven, exhaust gas cooled by a water-cooled exhaust gas cooler 115 has a content amount of PM (SOF, ISF) in the exhaust gas decreased by an ESP/C/DPF (cylindrical collecting part: inner diameter of $\phi$400 mm $\times$ length of 3000 mm; electrostatic voltage: DC-45000 V, cyclone collecting part: barrel diameter of $\phi$260 mm) 116, and is then allowed to pass through an NS scrubber that hardly dissolves or removes PM, and further transferred from the exhaust gas purification equipment to a silencer (not depicted), to become exhaust gas to be discharged to the outside of the ship. In this exhaust gas purification equipment, in the NS scrubber 113 which hardly dissolves or removes organic solvent soluble components, by a thin-film layer for treatment water located (partially falling down) on each of wall surfaces constituting the NS scrubber, $SO_x$ in the exhaust gas is absorbed in the treatment water while flowing near a treatment water surface of each wall surface, dissolved, and discharged, with its concentration drastically reduced; thus, PM in the exhaust gas merely flows along the surface of the treatment water, and the exhaust gas hardly collides with the surface of the scrubber treatment water fiercely, and merely smoothly flows along a portion near the surface of the NS scrubber treatment water, without being mutually mixed.

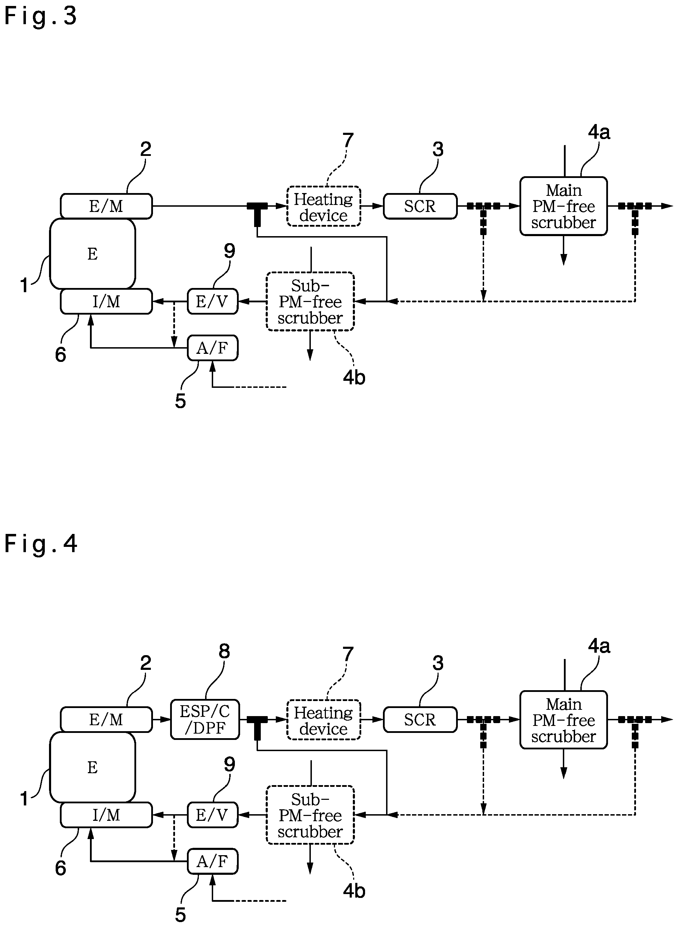

On the other hand, as for the treatment water of the conventional technology and exhaust gas (in particular, particle components), the exhaust gas fiercely collides with the surface of the scrubber treatment water to be mutually mixed, as is the case with normal scrubbers such as those of a pressurized water type, such as a jet scrubber, a venturi scrubber, and a spray tower and those of a packed bed type, such as a packed tower and a fluidized bed scrubber (refer to title New technology and laws for pollution prevention 2011 [on Atmosphere], Issue II, 11-278, Fig. 4.2.3-8 to II-282, Fig. 4.2.3-10, authored by Technology and Laws for Pollution Prevention Editorial Board and published by Japan Environmental Management Association for Industry and issued on January 20, 2011).

Therefore, in this NS scrubber 113 which hardly dissolves or removes PM of the exhaust gas purification equipment, since only $SO_x$ is mainly dissolved in the treatment water, with only a slight amount of an oily mixture mainly composed of PM corresponding to particles being dissolved and contained therein, the post treatment of the waste treatment water of the NS scrubber 113 which hardly dissolves or removes PM can be carried out with a small number of simple processes such as neutralization and filtration of sulfur-based components by using a small-size treatment device that is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean), discharge of the treated waste water to the ocean is possible even during sailing in and outside special sea areas, and moreover, a scrubber-through operation (in which when water (seawater) in the scrubber tank approaches waste water regulation reference values (regulation reference values for pH, oil, heavy metals), seawater is drawn to supply and replace tank water (seawater) as appropriate; that is, the treatment of the scrubber waste water (such as pH adjustment and pollutant collection) is not performed) can be carried out. However, since this exhaust gas purification equipment does not have an EGR system, nitrogen oxides are contained in the exhaust gas.

Note that when the exhaust gas is discharged without treated at all as depicted in Figure 16 in Patent Literature 2, a problem of waste disposal process of the scrubber treatment water is not posed; however, it goes without saying that all harmful components contained in the exhaust gas are discharged as they are to have adverse effects on environmental protection.

On the other hand, in Non-Patent Literature 1, in Chapter 3 "Requirements for machinery spaces of all ships", Part C "Control of discharge of oil", Regulation 15 "Control of discharge of oil", A. "Discharges outside special areas", 2 "Any discharge into the sea of oil or oily mixtures from ships of 400 gross tonnage and above shall be prohibited except when all the following conditions are satisfied", it is defined in .3 that "the oil content of the oily mixture without dilution does not exceed 15 parts per million". In B. "Discharges in special areas", 3 "Any discharge into the sea of oil or oily mixtures from ships of 400 gross tonnage and above shall be prohibited except when all the following conditions are satisfied", it is defined in .3 that "the oil content of the oily mixture without dilution does not exceed 15 parts per million".

Note herein that "oil" refers to crude oil, fuel oil, and lubricant, "oily" is supposed to be interpreted according to this meaning, and "oily mixtures" refer to mixtures containing oil.

Also, in the marine diesel engine described in Non-Patent Literature 2, by recirculating EGR gas diverted from exhaust gas to intake air, it is possible to reduce $NO_x$ by 80% from the exhaust gas and remove $SO_x$ nearly 100% from the EGR gas; however, with respect to the influence of soot and dust passing through the scrubber and sulfur components still contained in PM on the diesel machine body and the system, it is required not only to perform an actual ship test for a long period of time, but also to prevent wash water discharged outboard from the scrubber from influencing the environment and ecosystem, and in particular, regarding this wash water of the scrubber, its waste water treatment is expected to cause a large problem, such as removal of environmental pollution components or ecosystem influential components and pH adjustment, together with dissolution and floating of PM, dissolution of $SO_2$, and so forth. However, in sailing over a long period of time with a large-displacement marine diesel engine, treatment of at least an EGR gas flow, preferably a full amount of an exhaust gas flow including the EGR gas flow, is totally unrealistic if only a scrubber is used, in view of the size of the device (including a storage facility for preventing treated waste water containing oil from being discharged to the ocean).

On the other hand, in "Wave of clean solutions" described in Non-Patent Literature 3, "new clean technologies contribute to the shipping industry to reduce its environmental impact and meet stricter legislation for pollution at sea", and description goes as follows.

Summary (I) Technical Background

(I) IMO extends regulations for ship pollution

(a) Sulfur oxides (SOx) (applied both to newly built and existing vessels)

Worldwide regulations with limits for the maximum sulfur concentration of the fuel oils are applied. Stricter regulations are applied to in emission control sea regions. These limits are subject to a series of step changes starting in 2012. The alternative to using low-sulfur fuel is to equip exhaust gas purification equipment to reach the levels.

(b) Nitrogen oxides (NOx) (applied only to newly built vessels)

Existing regulation requirements are applied to installed marine diesel engines of not less than 130 KW output power. Different levels of control apply based on the ship construction date. To new ships travelling the emission control area, stricter regulations (Tier III) will apply from 2016.

(c) Bilge water (applied both to newly built and existing vessels)

Bilge water overboard limit is 15 ppm.

Summary (II) Water treatment technology

(II) Alfa Laval's water treatment technology:

(a) The Pure Bilge solution for treating only oily waste water in a vessel's bulge tank uses a single-stage high-speed centrifugal separation system to purify large water volumes without the use of chemicals, adsorption filters or membranes, and the oil-in-water content is set to less than 5 ppm.
(b) To enable ships to reach IMO demands for a reduction in NOx emissions of 80 percent, Alfa Laval is collaborating with MAN Diesel to develop an exhaust gas recirculation (EGR) system for large two-stroke diesel engines.
(c) On SOx emissions, Alfa Laval has developed a complete exhaust gas purification process. The system, which is currently undergoing onboard tests, also uses Alfa Laval separators to purify the dirty water coming from the scrubber before it is released into the ocean.

Summary (III) SOx-compliant technology:

(III) Alfa Laval's SOx-compliant technology

Equipped on (Ficaria Seaways (Denmark) = output of 21,000 kW, MAN B&W two-stroke engine)

(a) The fuel is fuel oil with a sulfur content of 2.2 percent, and the exhaust gas is washed and removed so that the sulfur content is brought down to the 0.1 percent level demanded by IMO (International Maritime Organization) regulations that come into force in 2015.
(b) Alfa Laval's Pure $SO_x$ can use one of both seawater and freshwater depending on the situation.
"Using water, either seawater or freshwater mixed with caustic soda and water solution, the scrubber washes the exhaust gas from the main engine"

- In the first stage, water is injected at a gas introduction portion to cool exhaust gas, and the majority of the soot and dust in the exhaust gas are removed here.
- In the second stage, sulfur oxides and others in the exhaust gas are further washed in a scrubber tower. To prevent water droplets in the exhaust gas from being carried away and corrosion, the water droplets in the gas are removed by a demister before being discharged through from the funnel.
- In the third stage, sulfur dioxides remaining in the exhaust gas are further washed. To prevent condensation and corrosion, small water droplets are removed from the exhaust gas before being discharged from the funnel of the ship (98 percent or more of sulfur components of the exhaust gas is removed).

From the description "It can be simply described as a big shower cabinet placed in the funnel of the ship," on line 16 in the second column to line 1 in the third column on page 12 of this Non-Patent Literature 3, the description "The scrubber equipped with the funnel of the ship can be described as a big shower cabinet," in a note in the photograph on page 14, and water and seawater being supplied from an upper portion of the scrubber of a hybrid system diagram (not depicted) and discharged together from a lowermost portion and the exhaust gas is supplied from a bypass dumper to a lower portion of the scrubber and discharged to the funnel directly coupled to an uppermost portion, it can be found that the technology is of a shower filling tower type. That is, it can be found that the technology is a type in which exhaust gas fiercely collides with the surface of scrubber treatment water and has a function capable of also removing particle components in the exhaust gas together with gaseous components. Therefore, for post treatment of scrubber water, it is required to prepare each structure and device described in the hybrid system diagram (not depicted) and operate and run these in a sophisticated manner.

In view of the above-described problems in the conventional technology, the present invention is to provide a device which removes $SO_x$ with high efficiency, while preventing PM in exhaust gas of a large-displacement marine diesel engine which particularly uses low-quality fuel such as fuel oil containing high-concentration sulfur components and from which high-speed and/or large-flow-rate exhaust gas is discharged, from being mixed into treatment water, and also removes $NO_x$ so as to purify the exhaust gas and, since the PM is prevented from being mixed into scrubber treatment water, the device makes it possible to treat the $SO_x$ by using a simple process with a small number of processes and a small-size treatment device that can be easily controlled, and also to allow the discharge thereof into the ocean even during sailing in and outside special sea areas; that is, the present invention is to provide an exhaust gas purification equipment for a marine diesel engine using low-quality fuel such as fuel oil containing high-concentration sulfur components, in which without requiring an expensive, large-sized treatment device for scrubber treatment water including a control unit with complex, sophisticated control (including a storage facility for preventing treated waste water containing oil from being discharged to the ocean) and having low installation flexibility, treatment water can be easily managed even with an inexpensive, easy-to-maintain, small-sized facility with high installation flexibility, scrubber-through operation is also possible in some cases, enormous capital investment associated with installation of large-scale desulfurizing device in oil industry is not required, and therefore fuel cost can be lowered.

Solution to Problems

An exhaust gas purification equipment for a marine diesel engine using low-quality fuel such as fuel oil containing high-concentration sulfur components according to the present invention is characterized, as a first aspect, in that the exhaust gas purification equipment includes: a selective catalytic reduction device (hereinafter, referred to as "SCR") that is installed in an exhaust pipe continued to an exhaust manifold of the engine; and a scrubber (hereinafter, referred to as "PM-free scrubber") disposed, on a downstream side of the SCR, the scrubber removing no PM using a difference in diffusion speed between gas and particles and because the exhaust gas does not fiercely collide with a surface of a thin-film layer formed of treatment water flowing down along each of wall surfaces constituting the scrubber, but smoothly flows along near the surface of the water thin-film layer.

An exhaust gas purification equipment for a marine diesel engine using low-quality fuel such as fuel oil containing high-concentration sulfur components according to the present invention is characterized, as a second aspect, in that the exhaust gas purification equipment includes: an SCR provided in an exhaust gas pipe continued to an exhaust manifold of the engine; a PM-free scrubber installed on the downstream side of the SCR; and an electric precipitation means for removing the PM installed on the upstream side of either the SCR or the PM-free scrubber.

The exhaust gas purification equipment for a marine diesel engine using low-quality fuel such as fuel oil containing high-concentration sulfur components according to the present invention is characterized, as a third aspect, in that the exhaust gas purification equipment includes: an SCR provided in an exhaust gas pipe continued to an exhaust manifold of the engine; a PM-free scrubber installed on the downstream side of the SCR; and a branching part for causing part of the exhaust gas to branch as EGR gas installed on an exhaust gas pipe on the upstream side of the SCR, on the downstream side of the SCR, or on the downstream side of the PM-free scrubber so that the EGR gas is recirculated to intake air of the engine via an EGR piping system continued to the branching part.

Moreover, the present invention is preferably provided with a mode in which a sub-PM-free scrubber is disposed on the EGR piping system. Furthermore, the present invention is preferably provided with a mode in which the electric precipitation means for removing the PM is installed on the upstream-side exhaust pipe of the SCR. And furthermore, the present invention is preferably provided with a mode in which the electric precipitation means for removing the PM is installed in the EGR piping system on the upstream side of the sub-PM-free scrubber.

The exhaust gas purification equipment for a marine diesel engine using low-quality fuel, such as fuel oil, containing high-concentration sulfur components according to the present invention is characterized, as a fourth aspect, in that the PM-free scrubber is installed in the exhaust pipe continued to the exhaust manifold of the engine, with the SCR being installed on the downstream side of the scrubber.

The exhaust gas purification equipment for a marine diesel engine using low-quality fuel, such as fuel oil, containing high-concentration sulfur components according to the present invention is characterized, as a fifth aspect, in that a PM-free scrubber is installed in an exhaust pipe continued to an exhaust manifold of the engine, the SCR is installed on the downstream side of the scrubber, and the electric precipitation means for removing the PM is further installed on the upstream side of the PM-free scrubber.

The exhaust gas purification equipment for a marine diesel engine using low-quality fuel, such as fuel oil, containing high-concentration sulfur components according to the present invention is characterized, as a sixth aspect, in that a PM-free scrubber is installed in an exhaust pipe connected to the exhaust manifold of the engine, the SCR is installed on the downstream side of the scrubber, and a branching part for allowing one portion of the exhaust gas to branch as EGR gas is installed on any one of the upstream side exhaust pipe of the PM-free scrubber, the downstream side exhaust pipe thereof, and the downstream side exhaust pipe of the SCR so that the EGR gas is recirculated to intake air of the engine via an EGR piping system continued to the branching part.

Moreover, the present invention is also preferably provided with a mode in which a sub-PM-free scrubber is disposed on the EGR piping system. Furthermore, in a more preferable mode, the electric precipitation means for removing the PM is installed in the EGR piping system on the upstream side of the sub-PM-free scrubber.

Also, in the first to sixth aspects of the invention, the present invention is preferably provided with a mode in which a heating device for heating the exhaust gas is disposed on the upstream side of the SCR.

Advantageous Effects of Invention

The exhaust gas purification equipment for a marine diesel engine using low-quality fuel containing high-concentration sulfur components according to the present invention has the following effects.

1. Since the SCR is installed in the exhaust pipe and since the PM-free scrubber, that hardly removes PM contained in exhaust gas by utilizing a difference in diffusion speed between gas and particles and since the exhaust gas hardly collides fiercely with a surface of a thin-film layer formed of treatment water flowing down along each of wall surfaces constituting the scrubber, but smoothly flows along near the surface of the water thin-film layer, is disposed on the downstream side thereof, the following effects are obtained:

(1). By the installation of the SCR, it becomes possible to greatly cut the content of $NO_x$ by reducing $NO_x$ in exhaust gas to $N_2$ and $H_2O$ so as to be detoxified and consequently to discharge an exhaust gas capable of maintaining environmental protection to the atmosphere.

(2). By the installation of the PM-free scrubber, almost all the $SO_x$ in the exhaust gas is dissolved in scrubber treatment water and removed; therefore, it becomes possible to greatly cut the content of $SO_x$ to be detoxified and consequently to discharge an exhaust gas capable of maintaining environmental protection to the atmosphere.

(3). In the scrubber treatment water, only the $SO_x$ is dissolved, with only small amount of the PM being dissolved and contained.

(4). By the function and effect of (3), in post treatment for treating the scrubber treatment water as treated waste water, $SO_x$ can be treated by a small-sized treatment device that can be easily controlled, with a small number of simple processes such as neutralization and filtration, without requiring a large-scale treatment function of treating PM by an expensive, large-sized treatment device including a control unit with complex, sophisticated control and having low installation flexibility (including a storage facility for preventing treated waste water containing oil from being discharged to the ocean), and discharge operation to the ocean is possible even during sailing in and outside special sea areas, and in some cases, a scrubber-through operation is possible.

(5). Additionally, in this configuration, the PM in the exhaust gas is hardly removed and discharged to the atmosphere.

2. By installing the heating device on the upstream side of the SCR so as to maintain the exhaust gas temperature at an activation temperature of the catalyst supported on the SCR or more (by heating the exhaust gas to a range from about 230°C to 450°C by using the heater when the flow velocity of the exhaust gas is slow, with long staying time inside the SCR, while to a range from about 360°C to 450°C when the flow velocity of the exhaust gas is fast, with short staying time inside the SCR), the following effects are obtained:

(1). Even in the case when the exhaust gas temperature is low, for example, upon engine start or the like, it is possible to ensure a reducing function with high efficiency of $NO_x$ in the exhaust gas to $N_2$ and $H_2O$.

(2). When an electric heater is solely used as the heating device, its control is easily carried out, and in the case when a fuel-injection device and an ignition device are used in combination, since power consumption is small, the energy efficiency becomes better as a whole, or by combining the electric heater and an oxidizing catalyst with each other, oxidizing reaction heat may be utilized, or alternatively, by using an oxidizing catalyst in combination, the PM in the exhaust gas can be oxidized so as to be reduced and removed therefrom.

3. When the ESP/C/DPF is installed on the upstream side of the PM-free scrubber or the upstream side of the SCR in the exhaust pipe, the following effects can be obtained:

(1). Since almost all the PM in the exhaust gas is removed by the ESP/C/DPF, with only small amount thereof being contained, discharge of the exhaust gas into the atmosphere is possible, and the load for a post treatment of the draining process for PM-free scrubber treatment water becomes extremely small (the effects of 1.(3) and (4) become higher).

(2). By installing the ESP/C/DPF on the upstream side of the SCR, almost all the PM in the exhaust gas that is allowed to flow into the SCR is removed by the ESP/C/DPF, with only a small amount thereof being contained, it becomes possible to prevent the SCR catalyst from being clogged by the PM, and consequently to prevent deterioration of reducing efficiency and degradation of the fuel cost due to an increased exhaust resistance, as well as suppressing an engine stop or the like for maintenance required for removing the deposited PM on the SCR catalyst.

4. In the case when the branching part is installed on the upstream side of the SCR, or on the downstream side of the SCR, or on the downstream side of the PM-free scrubber, the EGR gas is branched so that the EGR gas is recirculated to intake air, the following effects can be obtained:

(1). By supplying a carbon dioxide gas having a large thermal capacity to the combustion chamber to stay therein, the combustion temperature is lowered so as to suppress the generation of $NO_x$ at its combustion stage, and the content of $NO_x$ in the exhaust gas flowing into the SCR is preliminarily lowered, and along with the reduction of the $NO_x$ in the exhaust gas, the amount of $NO_x$ to be reduced in the SCR is reduced so that the load of the reduction amount of the SCR catalyst is lightened and the SCR is small-sized and shortened; thus, it becomes possible to reduce the exhaust resistance and to improve the installability and controllability of the device, and also to reduce both of the initial costs and running costs, such as the reduction of the amount of use of reducing agents, such as ammonia, aqueous ammonia, urea water, or the like.

(2). By a synergistic effect by the combination of the EGR system and SCR, the content of $NO_x$ is further reduced in the atmosphere-discharged exhaust gas so that an exhaust gas capable of maintaining environmental protection can be prepared.

5. In the case when the EGR branching part is formed on the downstream side of the PM-free scrubber, the gas purified in the PM-free scrubber is prepared as the EGR gas, the following effects can be obtained:

(1). Since the EGR gas contains hardly any $SO_x$ because $SO_x$ has been preliminarily removed by the PM-free scrubber, it is possible to reduce corrosions and wears in the engine components, such as a piston, a piston ring, a cylinder, a cylinder head, a supply/exhaust valve, a valve stem and the like, and to improve those members by eliminating the possibility of deteriorating the durability; therefore, inexpensive materials can be used.

(2). It is possible to reduce corrosions of supply/exhaust related parts, such as EGR piping, an EGR valve, a blower, a compressor wheel of a turbocharger, an intercooler, an intake pipe, an intake manifold and the like, and to improve those members by eliminating the possibility of deteriorating the durability; therefore, inexpensive materials can be used.

6. In the case when the sub-PM-free scrubber that removes $SO_x$ contained in the EGR gas, but hardly removes PM is installed in the EGR piping, the following effects can be obtained:

(1). SO$_x$ contained in the EGR gas is further reduced so that the functions and effects in the above-mentioned 5(1) and 5(2) become greater and since the scrubber treatment water of the sub-PM-free scrubber only has sulfur components dissolved therein, with only small amount of PM being dissolved and contained therein, the post treatment with the scrubber treatment water as waste treatment water is easily carried out in the same manner as in the main PM-free scrubber.

7. In the case when the SCR is installed in the exhaust pipe and the main PM-free scrubber, that hardly removes PM contained in the exhaust gas by utilizing difference in diffusion speeds between gas and particles and since the exhaust gas hardly collides fiercely with a surface of a thin-film layer formed of treatment water flowing down along each of wall constituting the scrubber but smoothly flows along near the surface of the water thin-film layer, is installed on the downstream side thereof, with the branching part being installed on either the upstream side or downstream side of the SCR of the exhaust pipe or the downstream side of the main PM-free scrubber so that NO$_x$ is preliminarily removed from the exhaust gas by diverting the EGR gas to be recirculated to intake air, and the sub-PM-free scrubber that hardly removes PM contained in the EGR gas is installed in the EGR piping, with the ESP/C/DPF for removing PM contained in the EGR gas being preferably installed on the upstream side of the sub-PM-free scrubber of the EGR piping system, the following effects can be obtained:

(1). Particle components, such as PM, metal oxides or the like in the EGR gas, which adversely cause wears, can be removed by the ESP/C/DPF.

(2). Since the EGR gas hardly contains any of PM and SO$_x$, it is possible to reduce corrosions and wears in the engine components, such as a piston, a piston ring, a cylinder, a cylinder head, a supply/exhaust valve, a valve stem and the like, and to improve those members by eliminating the possibility of deteriorating the durability; therefore, inexpensive materials can be used.

(3). Since the EGR gas hardly contains any of PM and SO$_x$, it is possible to reduce corrosions of supply/exhaust related parts, such as EGR piping, an EGR valve, a blower, a compressor wheel of a turbocharger, an intercooler, an intake pipe, an intake manifold and the like, and to improve those members by eliminating the possibility of deteriorating the durability; therefore, inexpensive materials can be used.

(4). Since the scrubber treatment water of the sub-PM-free scrubber only has sulfur components dissolved therein, with only small amount of PM being dissolved and contained therein, the post treatment with the scrubber treatment water as waste treatment water is easily carried out.

8. In the case when the PM-free scrubber is installed on the upstream side of the exhaust pipe, with the SCR being installed on the downstream side thereof, the following effects can be obtained:

(1). Since SO$_x$ is preliminarily removed from the exhaust gas flowing into the SCR, catalyst components (Pt, Pb, Rh, Ir or the like), such as noble metals or the like, carried on a flat plate, a ceramic carrier or the like forming the SCR can be prevented from being catalyst-poisoned by sulfur components, thereby making it possible to suppress lowering in the purifying rate, to provide easiness in device maintenance and a long service life, and to reduce operation costs and the like.

9. By installing the cooler on the upstream side of the ESP/C/DPF, the following effect can be obtained:

(1). By preliminarily cooling the exhaust gas flowing into the ESP/C/DPF, the PM collecting rate in the ESP/C/DPF is improved so that the PM flowing into the PM-free scrubber can be further reduced and the PM in the exhaust gas to be discharged overboard from the ship can be further reduced and the treatment water in the PM-free scrubber can be made clearer; thus, the post treatment with the scrubber treatment water as waste treatment water is easily carried out.

Brief Description of Drawings

Figure 1 is a block diagram depicting an entire structure of a device of a first example of the present invention.
Figure 2 is a block diagram depicting an entire structure of a device of a second example of the present invention.
Figure 3 is a block diagram depicting an entire structure of a device of a third example of the present invention.
Figure 4 is a block diagram depicting an entire structure of a device of a fourth example of the present invention.
Figure 5 is a block diagram depicting an entire structure of a device of a fifth example of the present invention.
Figure 6 is a block diagram depicting an entire structure of a device of a sixth example of the present invention.

Figure 7 is a block diagram depicting an entire structure of a device of a seventh example of the present invention.

Figure 8 is a block diagram depicting an entire structure of a device of an eighth example of the present invention.

Figure 9 is a block diagram depicting an entire structure of a device of a ninth example of the present invention.

Figure 10 is a conceptual diagram depicting a first example of a PM-free scrubber that hardly dissolves and removes PM in accordance with the present invention.

Figure 11 is a conceptual diagram depicting a second example of a PM-free scrubber that hardly dissolves and removes PM in accordance with the same invention.

Figure 12 is a conceptual diagram depicting a third example of a PM-free scrubber that hardly dissolves and removes PM in accordance with the same invention.

Figure 13 is a conceptual diagram depicting a fourth example thereof that hardly dissolves and removes PM in accordance with the same invention.

Figure 14 is an explanatory view depicting an operation principle of the PM-free scrubber in accordance with the present invention.

Figure 15 is a schematic diagram depicting an example of a conventional diesel engine exhaust gas purification equipment.

Figure 16 is a block diagram also depicting the entire structure of the conventional diesel engine exhaust gas purification equipment.

Description of Embodiments

First, the principles of the PM-free scrubber described in Patent Literature 2 previously suggested by the inventors are described by reference to an exhaust gas (the same is true for EGR gas).

(1) Diffusion coefficients of gas molecules and fine particles

- Diffusion speeds of gas molecules (what particularly matters in the technical field of the application is $SO_2$) and fine particles (what particularly matters in the technical field of the application is PM = ISF, Sulfate, SOF) greatly differ from each other. Gas molecules are far more prone to diffuse than fine particles. An index of diffusion speed is a diffusion coefficient D.
- Diffusion coefficients in air at room temperature of 20°C and 1 atmospheric pressure are compared.

$$SO_2: D = 1.5 \times 10^{-5}\ (m^2/s)$$

The diffusion coefficient (Brownian diffusion) of fine particles (PM) depends on a particle diameter d and, as d becomes smaller, the diffusion coefficient becomes larger.

Diffusion coefficients of fine particles are listed in the following table (Basics of Aerosol Science and Technology by Kanji Takahashi, Morikita Publishing Co., Ltd. (2004), p. 215).

[Table 1]

| Particle diameter d of fine particles ($\mu$m) | Diffusion coefficient D (m2/s) |
| --- | --- |
| 0.01 | $5.15 \times 10^{-8}$ |
| 0.05 | $2.27 \times 10^{-9}$ |
| 0.1 | $6.67 \times 10^{-10}$ |
| 0.5 | $6.31 \times 10^{-11}$ |

-Additionally, the range of particle diameters of PM is in a range of 0.01 to 0.5 $\mu$m.

- The diffusion coefficient of $SO_2$ gas is larger than that of PM by the order of three to six digits.

(2) PM-free scrubber

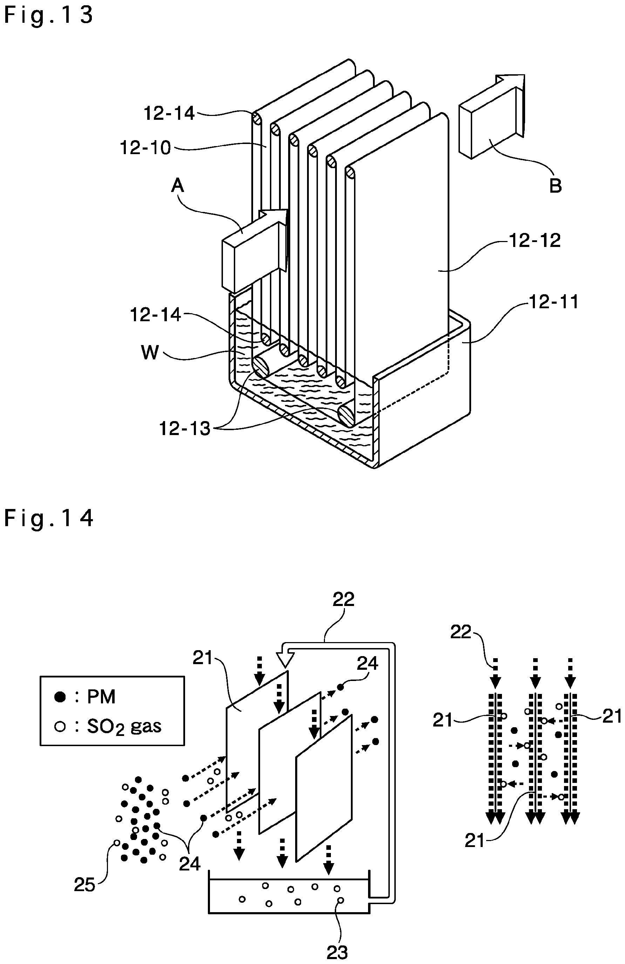

- The PM-free scrubber focuses on a difference in diffusion speed between $SO_2$ (gas) and PM (particles).
- A parallel-plate-type PM-free scrubber is described based on Figure 14.

In Figure 14, the reference numeral 21 denotes a parallel treatment plate, 22 denotes scrubber treatment water, 23 denotes sulfate ion, 24 denotes PM and 25 denotes $SO_2$ respectively. That is, in the case of the PM-free scrubber, the surfaces of walls of the parallel treatment plates 21 are covered with water flows of water films. In this case, $SO_2$ has high absorbency in water and extremely high solubility in water, and also has an extremely large diffusion coefficient. Therefore, upon passing through the wall surfaces of the parallel treatment plates 21, $SO_2$ flowing near the surface of the water thin-film layer that flows in a manner so as to cover the wall surface of the treatment plate is dissolved in the water flow having good absorbency from the surface of the water thin-film layer, and by this dissolution, the exhaust gas flowing near the surface of the water thin-film layer has its $SO_2$ concentration momentarily lowered; however, $SO_2$, which has an extremely high diffusion coefficient, immediately diffuses and moves at high speed to near the surface of the water thin-film layer having a low concentration from an adjacent flow with a high concentration in the exhaust gas flow to be supplied to the surface of the water thin-film layer, and by this continuous repetitive phenomenon between the dissolution on the surface of the water thin-film layer and the high-speed diffusion from the exhaust gas flow to the surface of the water thin-film layer, most of $SO_2$ is absorbed into the scrubber treatment water 22. On the other hand, the PM 24 has a large particle diameter and an extremely small diffusion coefficient. Therefore, since the PM corresponding to fine particles has no such continuous repetitive phenomenon between the dissolution on the surface of the water film and the diffusion from the exhaust gas flow to the surface of the water film, the PM does not reach the wall surfaces of the parallel treatment plates 21, with the result that most of the PM is not absorbed in the scrubber treatment water 22, and is discharged by simply passing through the PM-free scrubber.

(3) Effects of PM-free scrubber:

- In the PM-free scrubber, $SO_2$ is absorbed, and the PM 24 is let pass through; therefore, pollution by the PM of the scrubber treatment water 22 can be reduced. The scrubber treatment water 22, which absorbs $SO_2$ to become sulfurous acid water and then become sulfuric acid water, is subjected to neutralization process by caustic soda or the like, and can be discharged into the sea.
- In contrast, in the case of a conventional shower-type or venturi-type scrubber, not only $SO_2$ but also PM is absorbed in the scrubber treatment water. Therefore, pollution of the scrubber treatment water is fierce, and the number of waste water treatments increases in comparison with the PM-free scrubber, and an expensive, large-sized treatment device is required.

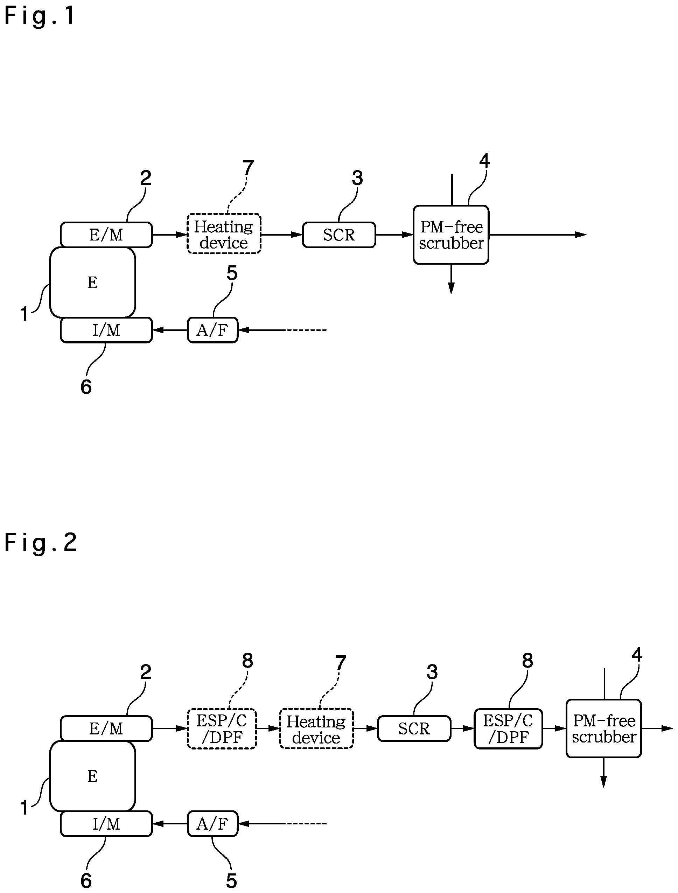

An exhaust gas purification equipment for a marine diesel engine depicted in Figure 1 as a device of a first example of the present invention is provided with a configuration in which on an exhaust pipe on the downstream side of an exhaust manifold (E/M) 2 of a diesel engine (E) 1 using low-quality fuel such as fuel oil or the like containing high-concentration sulfur components as its fuel, an SCR 3 that reduces $NO_x$ in exhaust gas into $N_2$ and $H_2O$ so as to greatly reduce the content of $NO_x$ to be detoxified is installed, and on the further downstream side thereof, a PM-free scrubber 4 that dissolves $SO_x$ in exhaust gas into treatment water, but hardly dissolves or removes PM into or from the treatment water is installed so that the resulting exhaust gas is discharged through a muffler (not shown) disposed on the downstream side of the PM-free scrubber 4, while outside air is sucked into an intake manifold (I/M) 6 of the engine via an air filter (A/F) 5. Additionally, on the upstream side of the SCR 3, a heating device 7 may be installed so that the exhaust gas temperature is raised to an activation temperature or more of a catalyst carried by the SCR 3.

In the case of the exhaust gas purification equipment configured as depicted in Figure 1, by the installation of the SCR 3, it becomes possible to greatly reduce the content of $NO_x$ in exhaust gas by reducing $NO_x$ into $N_2$ and $H_2O$ so as to detoxify $NO_x$, and moreover, the exhaust gas is allowed to pass through the PM-free scrubber 4 that hardly dissolves and removes the PM, and formed into a gas in which $SO_x$ is greatly reduced although it still contains PM, and is discharged outside from the ship through a funnel (not shown) via a silencer (not shown) from the exhaust gas purification equipment. In this exhaust gas purification equipment, the SCR 3 is used by utilizing an SCR catalyst produced by using a conventional method, with a catalyst component such as noble metal or the like being carried on a ceramic carrier such as titanium oxide or the like, and by allowing a gaseous reducing agent formed by spraying aqueous ammonia or urea water into the exhaust gas pipe through a nozzle to react with the SCR catalyst so as to reduce $NO_x$ in the exhaust gas into $N_2$ and $H_2O$ (when urea is used, $CO_2$ is generated). Additionally, by installing the heating device 7 on the upstream side of the SCR 3 so as to raise the temperature of the exhaust gas to an activation temperature or more of the SCR catalyst, $NO_x$ in the exhaust gas is positively reduced into $N_2$ and $H_2O$ (when urea is used, $CO_2$ is generated) more effectively. Alternatively, in this exhaust gas purification equipment, in the case when the PM-free scrubber 4 that hardly dissolves or removes the PM is used, by a water thin-film layer of scrubber treatment water located (partially falling down) on each of the wall surfaces of treatment plates constituting the PM-free scrubber, $SO_x$ as a gas in the exhaust gas, which has a large diffusion coefficient in the order of $1.5 \times 10^{-5}$ $(m^2/s)$, is absorbed in the surface of the treatment water while flowing along each wall surface, and is dissolved in the scrubber treatment water to be greatly reduced in its concentration, and is discharged; however, the PM having a large particle diameter in the order of 0.01 to 0.5 $\mu$m in the exhaust gas has a diffusion coefficient that is extremely small in comparison with $SO_x$ as a gas, by the order of three to six digits to the order of $10^{-8}$ to $10^{-11}$ $(m^2/s)$, and consequently, with the PM only flowing along a portion near the surface of the water thin-film layer of the scrubber treatment water, unlike the case with scrubbers such as those of the pressurized water type such as a jet scrubber, a venturi scrubber, and a spray tower and those of the packed bed type such as a packed tower and a fluidized bed scrubber, the exhaust gas hardly collides with the surface of the scrubber treatment water fiercely and merely smoothly flows partially along the surface of the water thin-film layer of the PM-free scrubber treatment water, with the result that mutual mixture does not occur.

Therefore, in the PM-free scrubber 4 that hardly dissolves or removes PM of the exhaust gas purification equipment, only $SO_x$ is mainly dissolved in the treatment water, and just a slight amount of PM is dissolved and contained therein, and in the post treatment of scrubber treatment water as waste treatment water by the PM-free scrubber 4 that hardly dissolves or removes PM, $SO_x$ can be treated by using a small-sized treatment device with a small number of simple processes such as neutralization and filtration, which is easily controlled, without requiring the necessity of extremely simplifying or miniaturizing a function of treating PM derived from fuel or lubricating oil, or without the necessity of such a function, by using an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases.

[Main Points of Device of First Example]

(1) By installing the SCR 3 in an exhaust pipe, and also by installing the PM-free scrubber 4, that removes $SO_x$ contained in exhaust gas, but hardly removes PM therefrom by utilizing a difference in diffusion speed between gas and particles <u>and since the exhaust gas hardly collides fiercely with a surface of a thin-film layer formed of treatment water flowing down along each of wall surfaces constituting the scrubber but smoothly flows along near the surface of the water thin-film layer</u>, on the downstream side thereof, $NO_x$ and $SO_x$ are removed from the exhaust gas to be discharged to the atmosphere.

- By the installation of the SCR 3, $NO_x$ in the exhaust gas is reduced to $N_2$ and $H_2O$, and the content of $NO_x$ is greatly reduced so as to be detoxified; thus, it becomes possible to discharge an exhaust gas capable of maintaining environmental protection to the atmosphere.
- By the installation of the PM-free scrubber 4, almost all the $SO_x$ in the exhaust gas is dissolved in scrubber treatment water and removed; therefore, it becomes possible to discharge an exhaust gas capable of maintaining environmental protection to the atmosphere.
- In the scrubber treatment water, only $SO_x$ is dissolved, with only small amount of PM being dissolved and contained.
- In the post treatment for treating the scrubber treatment water as treated waste water, $SO_x$ can be treated by a small-sized treatment device that can be easily controlled, with a small number of simple processes such as neutralization and filtration, without requiring a large-scale treatment function of treating PM by an expensive, large-sized treatment device including a control unit with complex, sophisticated control and having low installation flexibility (including a storage facility for preventing treated waste water containing oil from being discharged to the ocean), and discharge operation to the ocean is possible even during sailing in and outside special sea areas, and in some cases, a scrubber-through operation is possible. However, the PM in the exhaust gas is hardly removed and discharged as it is.

(2) By installing the heating device 7 on the upstream side of the SCR 3, the exhaust gas temperature is raised to an activation temperature or more of a catalyst carried by the SCR so that a reduction function for reducing $NO_x$ in the exhaust gas into $N_2$ and $H_2O$ is ensured with high efficiency.

- In the case when the flow velocity of the exhaust gas is slow, with long staying time inside the SCR 3, the exhaust gas is heated at about 230°C to 450°C by the heating device 7, while in the case when the flow velocity of the exhaust gas is fast, with short staying time inside the SCR 3, the exhaust gas is heated at about 360°C to 450°C.

- As the heating device 7, an electric heater may be solely used or a fuel-injection device and an ignition device may be used in combination, or an electric heater and an oxidizing catalyst may be used in combination, and when the oxidizing catalyst is used in combination with the heating device, the PM in the exhaust gas can be oxidized so as to be reduced and removed therefrom.

An exhaust gas purification equipment for a marine diesel engine depicted in Figure 2 as a device of a second example of the present invention has a configuration in which on an exhaust pipe on the downstream side of an exhaust manifold (E/M) 2 of a diesel engine (E) 1 using low-quality fuel such as fuel oil containing high-concentration sulfur components as its fuel, an SCR 3 that reduces $NO_x$ in exhaust gas into $N_2$ and $H_2O$ so as to greatly reduce the content of $NO_x$ to be detoxified is installed, and on the further downstream side thereof, a PM-free scrubber 4 that dissolves $SO_x$ in exhaust gas into treatment water, but hardly dissolves or removes PM into or from the treatment water is installed so that the resulting exhaust gas is discharged through a muffler (not shown) disposed on the downstream side of the PM-free scrubber 4, while outside air is sucked into an intake manifold (I/M) 6 of the engine via an air filter (A/F) 5, with an ESP/C/DPF 8 being further installed in an exhaust pipe directly below the exhaust manifold 2 or an exhaust pipe between the SCR 3 and the PM-free scrubber 4. Additionally, on the upstream side of the SCR 3, a heating device 7 may be installed so that the exhaust gas temperature is heated to an activation temperature or more of a catalyst carried by the SCR 3.

In the case of the exhaust gas purification equipment configured as depicted in Figure 2, as with the device of the first example depicted in Figure 1, by the installation of the SCR 3, it becomes possible to reduce $NO_x$ in exhaust gas into $N_2$ and $H_2O$ so as to greatly reduce the content of $NO_x$ to be detoxified, and by installing the ESP/C/DPF 8 in an exhaust pipe directly below the exhaust manifold 5 or an exhaust pipe between the SCR 3 and the PM-free scrubber 4, the PM in the exhaust gas is also removed to greatly reduce $SO_x$ so that a clean gas is formed. In the exhaust gas purification equipment, by the installation of the PM-free scrubber 4 that hardly dissolves and removes PM in the exhaust pipe, most of $SO_2$ that is a gas in the exhaust gas and has a large diffusion coefficient in the order of $1.5 \times 10^{-5}$ (m²/s) is removed, while PM that corresponds to particles having a large particle size in the order of 0.01 to 0.5 $\mu$m and an extremely small order of the diffusion coefficient by three to six digits, that is, in the order of $10^{-8}$ to $10^{-11}$ (m²/s), is hardly removed. That is, the exhaust gas hardly contains $SO_x$ that has been removed by the PM-free scrubber 4 although PM is contained therein, and by installing the ESP/C/DPF 8 in the exhaust pipe, the PM in the exhaust gas is removed so that contents of SOx and PM are reduced in the exhaust gas and the combustion temperature in the combustion chamber is lowered, thereby making it possible to suppress the generation of nitrogen oxides and to clean the exhaust gas. Additionally, by installing the heating device 7 on the upstream side of the SCR 3, the exhaust gas temperature may be raised to an activation temperature or more of a catalyst carried on the SCR 3. Moreover, by installing the ESP/C/DPF 8 on the upstream side of the SCR 3, it is possible to prevent the SCR catalyst formed by allowing catalyst components, such as noble metals (Pt, Pb, Rh, Ir or the like), to be carried on a flat plate or a ceramic carrier made of titanium oxide or the like, from being clogged by the PM.

Furthermore, in the exhaust gas purification equipment also, the PM-free scrubber 4, which removes $SO_x$, but hardly dissolves and removes PM, provides scrubber treatment water in which SOx is mainly dissolved, with only small amount of PM being dissolved and contained therein; therefore, in post treatment for treating the scrubber treatment water of the PM-free scrubber 4 that hardly dissolves and removes PM as treated waste water, $SO_x$ can be treated by a small-sized treatment device that can be easily controlled, with a small number of simple processes such as neutralization and filtration, without requiring the necessity of extremely simplifying or miniaturizing a function of treating PM derived from fuel or lubricating oil, or without the necessity of such a function, by using an expensive, large-sized treatment device including a control unit with complex, sophisticated control and having low installation flexibility (including a storage facility for preventing treated waste water containing oil from being discharged to the ocean); thus, it becomes possible to carry out a discharging operation of the waste treatment water to the ocean, even during sailing in and outside special sea areas, and also to carry out a scrubber-through operation in some cases.

[Main Points of Device of Second Example]

(1) By installing the SCR 3 and ESP/C/DPF 8 in an exhaust pipe, and also by installing the PM-free scrubber 4, that removes $SO_x$ contained in exhaust gas, but hardly removes PM therefrom by utilizing a difference in diffusion speed between gas and particles and since the exhaust gas hardly collides fiercely with a surface of a thin-film layer formed of treatment water flowing down along each of wall surfaces constituting the sscrubber but smooth flows along near the surface of the water thin-film layer, on the downstream side thereof, $NO_x$, $SO_x$ and PM are removed from the exhaust gas to be discharged to the atmosphere.

- By the installation of the SCR 3, $NO_x$ in the exhaust gas is reduced to $N_2$ and $H_2O$, and the content of $NO_x$ is greatly reduced so as to be detoxified; thus, it becomes possible to discharge an exhaust gas capable of maintaining environmental protection to the atmosphere.
- By the installation of the PM-free scrubber 4, almost all the $SO_x$ in the exhaust gas is dissolved in scrubber treatment water and removed; therefore, it becomes possible to discharge an exhaust gas capable of maintaining environmental protection to the atmosphere.

(2) By the installation of the ESP/C/DPF 8, the following effects can be obtained:

- Since almost all the PM in the exhaust gas is removed, with only a small amount thereof being contained, discharge of an exhaust gas capable of maintaining environmental protection to the atmosphere is possible, and the load for a post treatment of the draining process for the PM-free scrubber treatment water as waste treatment water becomes extremely small.
- Moreover, by installing the ESP/C/DPF 8 on the upstream side of the SCR, clogging of the SCR catalyst by the PM can be prevented.
- In the scrubber treatment water, only $SO_x$ is dissolved, with only small amount of PM being dissolved and contained therein.
- In the post treatment of the scrubber treatment water as waste treatment water, $SO_x$ can be treated by a small-sized treatment device with a small number of simple processes such as neutralization and filtration, which is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and scrubber-through operation is also possible in some cases.

(3) By the installation of the heating device 7 on the upstream side of the SCR 3, the exhaust gas temperature is raised to an activation temperature or more of a catalyst carried by the SCR so that a reduction function for reducing $NO_x$ in the exhaust gas into $N_2$ and $H_2O$ is ensured with high efficiency.

- In the case when the flow velocity of the exhaust gas is slow, with long staying time inside the SCR 3, the exhaust gas is heated to about 230°C to 450°C by the heating device 7, while in the case when the flow velocity of the exhaust gas is fast, with short staying time inside the SCR, the exhaust gas is heated to about 360°C to 450°C.
- As the heating device 7, an electric heater may be solely used or a fuel-injection device and an ignition device may be used in combination, or an electric heater and an oxidizing catalyst may be used in combination, and when the heating device and an oxidizing catalyst are used in combination, the PM in the exhaust gas can be oxidized so as to be reduced and removed therefrom.
- In the scrubber treatment water, only $SO_x$ is dissolved, with only small amount of PM being dissolved and contained therein.
- In the post treatment of the scrubber treatment water as waste treatment water, $SO_x$ can be treated by a small-sized treatment device with a small number of simple processes such as neutralization and filtration, which is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and scrubber-through operation is also possible in some cases.

An exhaust gas purification equipment for a marine diesel engine depicted in Figure 3 as a device of a third example of the present invention has a configuration in which on an exhaust pipe on the downstream side of an exhaust manifold (E/M) 2 of a diesel engine (E) 1 using low-quality fuel such as fuel oil containing high-concentration sulfur components as its fuel, an SCR 3 that reduces $NO_x$ in exhaust gas into $N_2$ and $H_2O$ so as to greatly reduce the content of $NO_x$ to be detoxified is installed, and on the further downstream side thereof, a main PM-free scrubber 4a that dissolves $SO_x$ in exhaust gas into treatment water, but hardly dissolves or removes PM into or from the treatment water is installed so that the resulting exhaust gas is discharged through a muffler (not shown) disposed on the downstream side of the main PM-free scrubber 4a, while a branching part is installed on any one of sides among an upstream side or a downstream side of the SCR 3 disposed in an exhaust pipe on the downstream side of the exhaust manifold (E/M) 2 and a downstream side of the main PM-free scrubber 4a so as to be connected to an EGR piping system so that an arrangement in which an EGR gas is recirculated to an intake piping system into an intake manifold 6, while being flow-rate controlled by an EGR valve (E/V) 9, is formed, and an arrangement in which outside air is sucked by the intake manifold (I/M) 6 of the engine via an air filter (A/F) 5 is formed, and in this arrangement, a sub-PM-free scrubber 4b having the same structure as described above is formed in the EGR piping system so that the EGR gas that has passed through the sub-PM-free scrubber 4b is recirculated to the intake piping system through the EGR valve (E/V) 9. Additionally, the heating device 7 may be installed on the upstream side of the SCR 3 so as to raise the exhaust gas temperature to an activation temperature or more of a catalyst carried by the SCR 3.

When the heating device and an oxidizing catalyst are used in combination, the PM in the exhaust gas can be oxidized so as to be reduced and removed therefrom.

An exhaust gas purification equipment for a marine diesel engine depicted in Figure 3 as a device of a third example of the present invention has a configuration in which on an exhaust pipe on the downstream side of an exhaust manifold (E/M) 2 of a diesel engine (E) 1 using low-quality fuel such as fuel oil containing high-concentration sulfur components as its fuel, an SCR 3 that reduces $NO_x$ in exhaust gas into $N_2$ and $H_2O$ so as to greatly reduce the content of $NO_x$ to be detoxified is installed, and on the further downstream side thereof, a main PM-free scrubber 4a that dissolves $SO_x$ in exhaust gas into treatment water, but hardly dissolves or removes PM into or from the treatment water is installed so that the resulting exhaust gas is discharged through a muffler (not shown) disposed on the downstream side of the main PM-free scrubber 4a, while a branching part is installed on any one of sides among an upstream side or a downstream side of the SCR 3 disposed in an exhaust pipe on the downstream side of the exhaust manifold (E/M) 2 and a downstream side of the main PM-free scrubber 4a so as to be connected to an EGR piping system so that an arrangement in which an EGR gas is recirculated to an intake piping system into an intake manifold 6, while being flow-rate controlled by an EGR valve (E/V) 9, is formed, and an arrangement in which outside air is sucked by the intake manifold (I/M) 6 of the engine via an air filter (A/F) 5 is formed, and in this configuration, a sub-PM-free scrubber 4b having the same structure as described above is formed on the EGR piping system so that the EGR gas that has passed through the sub-PM-free scrubber 4b is recirculated to the intake piping system through the EGR valve (E/V) 9; thus, in any of the main PM-free scrubber and the sub-PM-free scrubber, almost all of $SO_x$ that is a gas in the exhaust gas or the EGR gas and has a large diffusion coefficient in the order of $1.5 \times 10^{-5}$ (m2/s) is removed, while PM corresponding to particles having a large particle size in the order of 0.01 to 0.5 $\mu$m and a diffusion coefficient that is extremely small by the order of three to six digits, that is, in the order of $10^{-8}$ to $10^{-11}$ (m2/s), is hardly removed. Additionally, the heating device 7 may be installed on the upstream side of the SCR 3 so as to raise the exhaust gas temperature to an activation temperature or more of a catalyst carried by the SCR 3.

[Main Points of Device of Third Example]

(1) By installing the SCR 3 in an exhaust pipe, and also by installing the main PM-free scrubber 4a, that removes $SO_x$ contained in exhaust gas, but hardly removes PM therefrom by utilizing a difference in diffusion speed between gas and particles and since the exhaust gas hardly collides fiercely with a surface of a thin-film, layer formed of treatment water flowing down along each of wall surfaces constituting the scrubber but smoothly flows along near the surface of the water thin-film layer, on the downstream side thereof, $NO_x$ and $SO_x$ are removed from the exhaust gas to be discharged to the atmosphere.

- By the installation of the SCR 3, $NO_x$ in the exhaust gas is reduced to $N_2$ and $H_2O$, and the content of $NO_x$ is greatly reduced so as to be detoxified; thus, it becomes possible to discharge an exhaust gas capable of maintaining environmental protection to the atmosphere.
- By the installation of the main PM-free scrubber 4a, almost all the $SO_x$ in the exhaust gas is dissolved in scrubber treatment water and removed; therefore, it becomes possible to discharge an exhaust gas capable of maintaining environmental protection to the atmosphere.
- In the scrubber treatment water, only $SO_x$ is dissolved, with only small amount of PM being dissolved and contained therein.
- In the post treatment of the scrubber treatment water as waste treatment water, $SO_x$ can be treated by a small-sized treatment device with a small number of simple processes such as neutralization and filtration, which is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and scrubber-through operation is also possible in some cases. However, the PM in the exhaust gas is hardly removed and discharged as it is.

(2) By installing a branching part on any one of sides among an upstream side or a downstream side of the SCR 3 and a downstream side of the main PM-free scrubber 4a, an EGR gas is branched and recirculated to intake air; thus, the combustion temperature in the combustion chamber is lowered, thereby making it possible to suppress the generation of $NO_x$ and consequently to preliminarily reduce the content of $NO_x$ in the exhaust gas flowing into the SCR.

- Since the content of $NO_x$ in the exhaust gas is reduced, the amount of $NO_x$ to be reduced in the SCR 3 is reduced to make the load on the SCR catalyst lighter so that the SCR 3 is miniaturized, the installability and controllability of the device are improved and both of the initial costs and running costs, such as the reduction of the amount of use of reducing agents, such as ammonia, aqueous ammonia, urea water, or the like, can be reduced.
- By a synergistic effect by the combination of the EGR system and SCR, the content of $NO_x$ is further reduced in the atmosphere-discharged exhaust gas so that an exhaust gas capable of maintaining environmental protection can be prepared.

(3) By installing the EGR branching part on the downstream side of the main PM-free scrubber 4a, a gas purified by the main PM-free scrubber 4a can be used as the EGR gas.

- Since the EGR gas contains hardly any $SO_x$ because $SO_x$ has been preliminarily removed by the main PM-free scrubber 4a, it is possible to reduce corrosions and wears in the engine components, such as a piston, a piston ring, a cylinder, a cylinder head, a supply/exhaust valve, a valve stem and the like, and to improve those members by eliminating the possibility of deteriorating the durability; therefore, inexpensive materials can be used.
- It is possible to reduce corrosions of supply/exhaust related parts, such as EGR piping, an EGR valve, a blower, a compressor wheel of a turbocharger, an intercooler, an intake pipe, an intake manifold and the like, and to improve those members by eliminating the possibility of deteriorating the durability; therefore, inexpensive materials can be used.

(4) The sub-PM-free scrubber 4b that removes $SO_x$ contained in the EGR gas, but hardly removes PM in the EGR piping system is installed.

- Since the treatment water of the sub-PM-free scrubber 4b also has only sulfur components dissolved therein, with only small amount of PM being dissolved and contained therein, the post process of the scrubber treatment water as waste treatment water can be easily carried out in the same manner as in the above-mentioned main PM-free scrubber 4a.
- In the scrubber treatment water, only $SO_x$ is dissolved, with only small amount of PM being dissolved and contained.
- In the post treatment of the scrubber treatment water as waste treatment water, $SO_x$ can be treated by a small-sized treatment device with a small number of simple processes such as neutralization and filtration, which is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and scrubber-through operation is also possible in some cases.

(5) By the installation of the heating device 7 on the upstream side of the SCR 3, the exhaust gas temperature is raised to an activation temperature or more of a catalyst carried by the SCR 3 so that a reduction function for reducing $NO_x$ in the exhaust gas into $N_2$ and $H_2O$ is ensured with high efficiency.

- In the case when the flow velocity of the exhaust gas is slow, with long staying time inside the SCR 3, the exhaust gas is heated to about 230°C to 450°C by the heating device 7, while in the case when the flow velocity of the exhaust gas is fast, with short staying time inside the SCR, the exhaust gas is heated to about 360°C to 450°C.
- As the heating device 7, an electric heater may be solely used or a fuel-injection device and an ignition device may be used in combination, or an electric heater and an oxidizing catalyst may be used in combination, and when the heating device and an oxidizing catalyst are used in combination, the PM in the exhaust gas can be oxidized so as to be reduced and removed therefrom.

An exhaust gas purification equipment for a marine diesel engine depicted in Figure 4 as a device of a fourth example of the present invention has a configuration in which on an exhaust pipe right below an exhaust manifold (E/M) 2 of a diesel engine (E) 1 using low-quality fuel such as fuel oil containing high-concentration sulfur components as its fuel, an ESP/C/DPF 8 for removing PM from an exhaust gas is installed, and on the downstream side of this ESP/C/DPF 8, an SCR 3 that reduces $NO_x$ in exhaust gas into $N_2$ and $H_2O$ so as to greatly reduce the content of $NO_x$ to be detoxified is installed, and on the further downstream side thereof, a main PM-free scrubber 4a that dissolves $SO_x$ in exhaust gas into treatment water, but hardly dissolves or removes PM into or from the treatment water is installed so that the resulting exhaust gas is discharged through a muffler (not shown) disposed on the downstream side of the main PM-free scrubber 4a, and an arrangement in which from a branching part installed on any one of downstream sides of the ESP/C/DPF 8, the SCR 3 and the main PM-free scrubber 4a, an EGR piping system is branched so that the EGR gas is recirculated to an intake piping system into the intake manifold 6 of the engine, while being flow-rate controlled by the EGR valve (E/V) 9, is formed and an arrangement in which a sub-PM-free scrubber 4b is further formed in the EGR piping system so that the EGR gas that has passed through the sub-PM-free scrubber 4b is recirculated into the intake piping system through the EGR valve (E/V) 9 is formed; thus, almost all of $SO_x$ that is a gas in the exhaust gas or the EGR gas and has a large diffusion coefficient in the order of $1.5 \times 10^{-5}$ ($m^2$/s) is removed, while PM corresponding to particles having a large particle size in the order of 0.01 to 0.5 $\mu$m and a diffusion coefficient that is extremely small by the order of three to six digits, that is, in the order of $10^{-8}$ to $10^{-11}$ ($m^2$/s), is hardly removed in either of the main PM-free scrubber and the sub-PM-free scrubber. Additionally, the heating device 7 may be installed on the upstream side of the SCR 3 so as to raise the exhaust gas temperature to an activation temperature or more of a catalyst carried by the SCR 3.

[Main Points of Device of Fourth Example]

(1) By installing the SCR 3 in an exhaust pipe, and also by installing the main PM-free scrubber 4a, that removes $SO_x$ contained in exhaust gas, but hardly removes PM therefrom by utilizing a difference in diffusion speed between gas and particles and since the exhaust gas hardly collides fiercely with a surface of a thin-film layer formed of treatment water flowing down, along each, of wall surfaces constituting the scrubber but smoothly flows along near the surface of the water thin-film layer, on the downstream side thereof, $NO_x$ and $SO_x$ are removed from the exhaust gas to be discharged to the atmosphere, and by branch-connecting an EGR piping system to any one of the downstream sides of the ESP/C/DPF 8, SCR 3 and the main PM-free scrubber 4a of the exhaust pipe, the EGR gas is recirculated so as to preliminarily remove $NO_x$, and the sub-PM-free scrubber 4b that hardly removes PM contained in the EGR gas is also installed in the EGR piping system.

- By the installation of the SCR 3, $NO_x$ in the exhaust gas is reduced to $N_2$ and $H_2O$, and the content of $NO_x$ is greatly reduced so as to be detoxified; thus, it becomes possible to discharge an exhaust gas capable of maintaining environmental protection to the atmosphere.
- By the installation of the main PM-free scrubber 4a, since almost all the $SO_x$ in the exhaust gas is dissolved in scrubber treatment water and removed, it becomes possible to discharge an exhaust gas capable of maintaining environmental protection to the atmosphere.
- In the scrubber treatment water, only $SO_x$ is dissolved, with only small amount of PM being dissolved and contained therein.
- In the post treatment of the scrubber treatment water as waste treatment water, $SO_x$ can be treated by a small-sized treatment device with a small number of simple processes such as neutralization and filtration, which is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases.

(2) By the installation of the ESP/C/DPF 8, the following effects can be obtained:

- Since almost all the PM in the exhaust gas is removed with only a small amount thereof being contained therein, discharge of the exhaust gas into the atmosphere is possible, and the load for a post treatment of the PM-free scrubber treatment water as waste treatment water becomes extremely small.
- By installing the ESP/C/DPF 8 on the upstream side of the SCR 3, clogging of the SCR catalyst by PM is further prevented.

(3) By the installation of the EGR piping system, the following effects can be obtained:

- Since the content of $NO_x$ in the exhaust gas is reduced, the amount of $NO_x$ to be reduced in the SCR 3 is reduced so that the load on the SCR catalyst is lightened and the SCR is small-sized; thus, it becomes possible to improve the installability and controllability of the device, and also to reduce both of the initial costs and running costs, such as the reduction of the amount of use of reducing agents, such as ammonia, aqueous ammonia, urea water, or the like.
- By a synergistic effect by the combination of the EGR system and SCR, the content of $NO_x$ is further reduced in the atmosphere-discharged exhaust gas so that an exhaust gas capable of maintaining environmental protection can be prepared.

(4) When the EGR gas is branched from the downstream side of the main PM-free scrubber 4a, the following effects can be obtained:

- Since the EGR gas from which $SO_x$ has been preliminarily removed by the PM-free scrubber 4a hardly contains any $SO_x$, corrosions and wears in the engine components, such as a piston, a piston ring, a cylinder, a cylinder head, a supply/exhaust valve, a valve stem and the like, are reduced, and it is possible to improve those members by eliminating the possibility of deteriorating the durability; therefore, inexpensive materials can be used.
- Since corrosions in the supply/exhaust related parts, such as EGR piping, an EGR valve, a blower, a compressor wheel of a turbocharger, an intercooler, an intake pipe, an intake manifold and the like, can be reduced and it becomes possible to improve those members by eliminating the possibility of deteriorating the durability; therefore, inexpensive materials can be used.

(5) When the sub-PM-free scrubber 4b is installed in the EGR piping system, the following effects can be obtained:

- Since the treatment water of the sub-PM-free scrubber 4b also has only sulfur components dissolved therein, with only small amount of PM being dissolved and contained therein, the post process of the scrubber treatment water as waste treatment water can be easily carried out in the same manner as in the above-mentioned main PM-free scrubber 4a.
- In the scrubber treatment water, only $SO_x$ is dissolved with only small amount of PM being dissolved and contained therein.
- In the post treatment of scrubber treatment water as waste treatment water, $SO_x$ can be treated by using a small-sized treatment device with a small number of simple processes such as neutralization and filtration, which is easily controlled, without requiring a large-scale treatment function of treating PM by using an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases.

(6) When the heating device 7 is installed on the upstream side of the SCR 3, the following effects can be obtained:

- When the flow velocity of the exhaust gas is slow, with long staying time inside the SCR, the exhaust gas is heated by the heating device 7 to about 230°C to 450°C, and when the flow velocity of the exhaust gas is fast, with short staying time inside the SCR 3, the exhaust gas is heated by the heating device 7 to about 360°C to 450°C.
- As the heating device 7, an electric heater may be solely used or a fuel-injection device and an ignition device may be used in combination, or an electric heater and an oxidizing catalyst may be used in combination, and when the oxidizing catalyst is used in combination with the heating device, the PM in the exhaust gas can be oxidized so as to be reduced and removed therefrom.

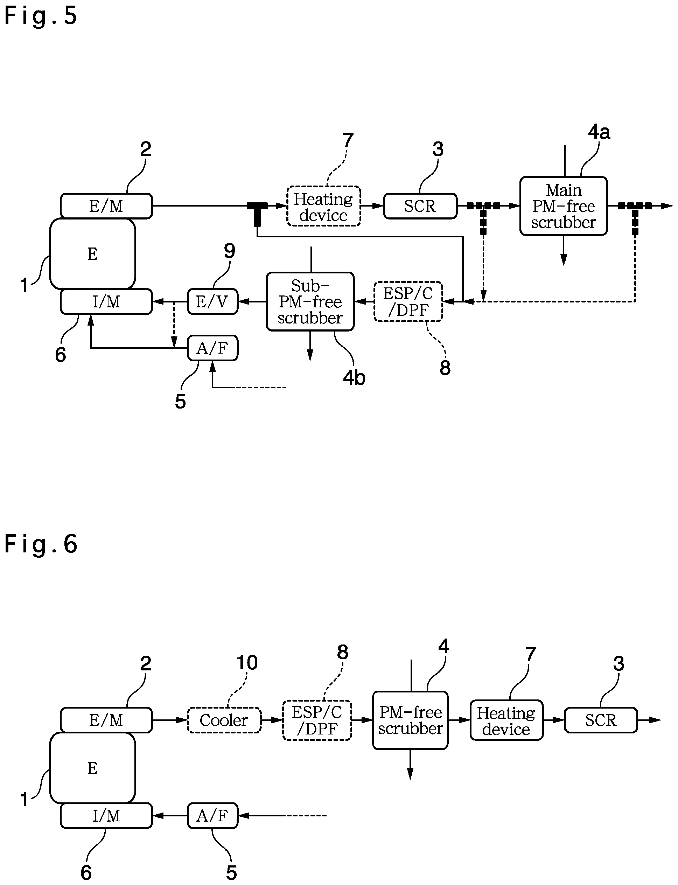

An exhaust gas purification equipment for a marine diesel engine depicted in Figure 5 as a device of a fifth example of the present invention has a configuration in which on an exhaust pipe on the downstream side of an exhaust manifold (E/M) 2 of a diesel engine (E) 1 using low-quality fuel such as fuel oil containing high-concentration sulfur components as its fuel, an SCR 3 that reduces $NO_x$ in exhaust gas into $N_2$ and $H_2O$ so as to greatly reduce the content of $NO_x$ to be detoxified is installed, and on the further downstream side thereof, a main PM-free scrubber 4a that dissolves $SO_x$ in exhaust gas into treatment water, but hardly dissolves or removes PM into or from the treatment water is installed so that the resulting exhaust gas is discharged through a muffler (not shown) disposed on the downstream side of the main PM-free scrubber 4a, and an arrangement in which a branching part is installed on either the upstream side or the downstream side of the SCR 3 disposed in an exhaust pipe on the downstream side of the exhaust manifold (E/M) 2 or the downstream side of the main-PM-free scrubber 4a, with the sub-PM-free scrubber 4b being formed on the EGR piping system, so that the EGR gas that has passed through the sub-PM-free scrubber 4b is recirculated to the intake piping system through the EGR valve (E/V) 9 is formed; thus, almost all of $SO_x$ that is a gas in the exhaust gas or the EGR gas and has a large diffusion coefficient in the order of $1.5 \times 10^{-5}$ $(m^2/s)$ is removed, while PM corresponding to particles having a large particle size in the order of 0.01 to 0.5 $\mu$m and a diffusion coefficient that is extremely small by the order of three to six digits, that is, in the order of $10^{-8}$ to $10^{-11}$ $(m^2/s)$, is hardly removed in either of the main PM-free scrubber and the sub-PM-free scrubber. Additionally, the heating device 7 may be installed on the upstream side of the SCR 3 so as to raise the exhaust gas temperature to an activation temperature or more of a catalyst carried by the SCR 3, and the ESP/C/DPF 8 for removing PM from the exhaust gas on the downstream side of the sub-PM-free scrubber 4b of the EGR piping system.

[Main Points of Device of Fifth Example]

(1) By installing the SCR 3 in an exhaust pipe, and also by installing the main PM-free scrubber 4a, that removes $SO_x$ contained in exhaust gas, but hardly removes PM therefrom by utilizing a difference in diffusion speed between gas and particles and since the exhaust gas hardly collides fiercely with a surface of a thin-film, layer formed of treatment water flowing down along each of wall surfaces constituting the scrubber but smoothly flows along near the surface of the water thin-film layer, on the downstream side thereof, $NO_x$ and $SO_x$ are removed from the exhaust gas to be discharged to the atmosphere, and by branch-connecting an EGR piping system onto either the upstream side or downstream side of the SCR 3 of the exhaust pipe or the downstream side of the main PM-free scrubber 4a so that by recirculating the EGR gas, $NO_x$ is preliminarily removed from the exhaust gas, or the sub-PM-free scrubber 4b that removes $SO_x$ contained in the EGR gas, but hardly removes PM therefrom is installed in the EGR piping system, and more preferably, the ESP/C/DPF 8 that removes the PM contained in the EGR gas is installed on the upstream side of the EGR piping system.

- By the installation of the SCR 3, $NO_x$ in the exhaust gas is reduced to $N_2$ and $H_2O$ to greatly reduce the content of $NO_x$ to be detoxified; thus, it becomes possible to discharge an exhaust gas capable of maintaining environmental protection to the atmosphere.
- By the installation of the main PM-free scrubber 4a, since almost all the $SO_x$ in the exhaust gas is dissolved in scrubber treatment water and removed, it becomes possible to discharge an exhaust gas capable of maintaining environmental protection to the atmosphere.
- In the scrubber treatment water, only $SO_x$ is dissolved, with only small amount of PM being dissolved and contained therein.
- In the post treatment of the scrubber treatment water as waste treatment water, $SO_x$ can be treated by a small-sized treatment device with a small number of simple processes such as neutralization and filtration, which is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and scrubber-through operation is also possible in some cases.

(2) By installing a branching part on either the upstream side or the downstream side of the SCR 3, or the downstream side of the main-PM-free scrubber 4a, the EGR gas is branched and recirculated to the intake air so that by decreasing the combustion temperature in the combustion chamber, the generation of $NO_x$ is suppressed and the content of $NO_x$ in the exhaust gas flowing into the SCR 3 can be preliminarily lowered.

- Since the content of $NO_x$ in the exhaust gas is reduced, the amount of $NO_x$ to be reduced in the SCR 3 is reduced so that the load on the SCR catalyst is lightened and the SCR is small-sized; thus, it becomes possible to improve the installability and controllability of the device, and also to reduce both of the initial costs and running costs, such as the reduction of the amount of use of reducing agents, such as ammonia, aqueous ammonia, urea water, or the like.
- By a synergistic effect by the combination of the EGR system and SCR, the content of $NO_x$ is further reduced in the atmosphere-discharged exhaust gas so that an exhaust gas capable of maintaining environmental protection can be prepared.

(3) By installing the EGR branching part on the downstream side of the main PM-free scrubber 4a, a gas purified by the main PM-free scrubber 4a can be used as the EGR gas.

- Since the EGR gas from which $SO_x$ has been preliminarily removed by the PM-free scrubber 4a hardly contains any $SO_x$, corrosions and wears in the engine components, such as a piston, a piston ring, a cylinder, a cylinder head, a supply/exhaust valve, a valve stem and the like, are reduced, and since it is possible to improve those members by eliminating the possibility of deteriorating the durability, inexpensive materials can be used.
- Since corrosions in the supply/exhaust related parts, such as EGR piping, an EGR valve, a blower, a compressor wheel of a turbocharger, an intercooler, an intake pipe, an intake manifold and the like, can be reduced and since it becomes possible to improve those members by eliminating the possibility of deteriorating the durability, inexpensive materials can be used.

(4) By installing a sub-PM-free scrubber 4b in the EGR piping system and by preferably installing the ESP/C/DPF 8 on the upstream side of the sub-PM-free scrubber 4b, PM or the like is further removed from the EGR gas.

- Most of particle components, such as PM, metal oxides or the like in the EGR gas, which adversely cause wears, can be removed by the ESP/C/DPF.
- Since the EGR gas hardly contains any $SO_x$ (any PM when the ESP/C/DPF is installed), it is possible to reduce corrosions and wears in the engine components, such as a piston, a piston ring, a cylinder, a cylinder head, a supply/exhaust valve, a valve stem and the like, and to improve those members by eliminating the possibility of deteriorating the durability; therefore, inexpensive materials can be used.
- Since the EGR gas hardly contains any $SO_x$ (any PM when the ESP/C/DPF is installed), it is possible to reduce corrosions in the supply/exhaust related parts, such as EGR piping, an EGR valve, a blower, a compressor wheel of a turbocharger, an intercooler, an intake pipe, an intake manifold and the like, and since it becomes possible to improve those members by eliminating the possibility of deteriorating the durability, inexpensive materials can be used.
- Since the scrubber treatment water of the sub-PM-free scrubber 4b only has sulfur components dissolved therein, with only small amount of PM being dissolved and contained therein, the post process as waste treatment water is easily carried out.
- The scrubber treatment water only has $SO_x$ dissolved therein, with only small amount of PM being dissolved and contained therein.
- In the post treatment of scrubber treatment water as waste treatment water, $SO_x$ can be treated by using a small-sized treatment device with a small number of simple processes such as neutralization and filtration, which is easily controlled, without requiring a large-scale treatment function of treating PM by using an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases.

(5) When a heating device is installed on the upstream side of the SCR 3, the following effects can be obtained:

- Since almost all the PM in the exhaust gas is removed with only a small amount thereof being contained therein, discharge of the exhaust gas into the atmosphere is possible, and the load for a treatment of the main-PM-free scrubber treatment water as waste treatment water becomes extremely small.
- By installing the ESP/C/DPF 8 on the upstream side of the SCR 3, clogging of the SCR catalyst by PM is further prevented.

An exhaust gas purification equipment for a marine diesel engine depicted in Figure 6 as a device of a sixth example of the present invention has a configuration in which on an exhaust pipe on the downstream side of an exhaust manifold (E/M) 2 of a diesel engine (E) 1 using low-quality fuel such as fuel oil containing high-concentration sulfur components as its fuel, an SCR 3 that reduces $NO_x$ in exhaust gas into $N_2$ and $H_2O$ so as to greatly reduce the content of $NO_x$ to be detoxified is installed, and on the further upstream side thereof, a PM-free scrubber 4 that dissolves $SO_x$ in exhaust gas into treatment water, but hardly dissolves or removes PM into or from the treatment water is installed so that the resulting exhaust gas is discharged through a muffler (not shown) disposed on the downstream side of the SCR and outside air is sucked into an intake manifold (I/M) 6 of the engine via an air filter (A/F) 5; therefore, in the PM-free scrubber, almost all of $SO_x$ that is a gas in the exhaust gas and has a large diffusion coefficient in the order of $1.5 \times 10^{-5}$ $(m^2/s)$ is removed, while PM corresponding to particles having a large particle size in the order of 0.01 to 0.5 $\mu m$ and a diffusion coefficient that is extremely small by the order of three to six digits, that is, in the order of $10^{-8}$ to $10^{-11}$

(m$^2$/s), is hardly removed, and preferably, an ESP/C/DPF 8 is installed in an exhaust pipe in a gap relative to the PM-free scrubber 4, located right below the exhaust manifold 2.

Additionally, the heating device 7 may be installed on the upstream side of the SCR 3 so as to raise the exhaust gas temperature to an activation temperature or more of a catalyst carried by the SCR. Moreover, a cooler 10 may be installed on the upstream side of the ESP/C/DPF 8 so that the exhaust gas flowing into the ESP/C/DPF 8 is preliminarily cooled.

In the case of the exhaust gas purification equipment having the configuration shown in Figure 6, the exhaust gas is allowed to pass through the PM-free scrubber 4 that dissolves and removes SO$_x$, but hardly dissolves or removes PM, and formed into a gas in which PM is contained, but SO$_x$ is greatly reduced, and by the installation of the SCR 3 on the downstream side of the PM-free scrubber 4, NO$_x$ in the exhaust gas in which SO$_x$ has been greatly reduced is reduced into N$_2$ and H$_2$O so as to greatly reduce the content of the NO$_x$ to be detoxified; thus, it is possible to discharge the exhaust gas overboard from the ship as an exhaust gas capable of maintaining environmental protection, from the exhaust gas purification equipment through a funnel (not shown) via a silencer (not shown). In the exhaust gas purification equipment, in the case of the PM-free scrubber 4 that hardly dissolves and removes PM, by a water thin-film layer of scrubber treatment water located (partially falling down) on each of the wall surfaces constituting the PM-free scrubber, SO$_x$ as a gas in the exhaust gas, which has a large diffusion coefficient in the order of $1.5 \times 10^{-5}$ (m$^2$/s), is absorbed in the surface of the water thin-film layer of the scrubber treatment water while flowing along each wall surface, and is dissolved in the scrubber treatment water to be greatly reduced in its concentration, and is discharged; however, the PM having a large particle diameter in the order of 0.01 to 0.5 $\mu$m in the exhaust gas has a diffusion coefficient that is extremely small in comparison with SO$_x$ as a gas, by the order of three to six digits to the order of $10^{-8}$ to $10^{-11}$ (m$^2$/s), and consequently, with the PM only flowing along a portion near the surface of the water thin-film layer of the scrubber treatment water, unlike the case with scrubbers such as those of the pressurized water type such as a jet scrubber, a venturi scrubber, and a spray tower and those of the packed bed type such as a packed tower and a fluidized bed scrubber, the exhaust gas hardly collides with the surface of the water thin-film layer of the scrubber treatment water fiercely and merely smoothly flows partially along the surface of the water thin-film layer of the PM-free scrubber 4 treatment water, with the result that mutual mixture does not occur. Moreover, in the exhaust gas purification equipment, the SCR is used by utilizing an SCR catalyst produced by using a conventional method, with a catalyst component such as noble metal or the like being carried on a ceramic carrier such as titanium oxide or the like, and by allowing a gaseous or atomized reducing agent formed by spraying aqueous ammonia or urea water into the exhaust gas pipe through a nozzle to react with the SCR catalyst so as to reduce NO$_x$ in the exhaust gas into N$_2$ and H$_2$O (when urea is used, CO$_2$ is generated). Additionally, by installing the heating device on the upstream side of the SCR so as to raise the temperature of the exhaust gas to an activation temperature or more of the SCR catalyst, NO$_x$ in the exhaust gas is positively reduced into N$_2$ and H$_2$O (when urea is used, CO$_2$ is generated) more effectively.

Therefore, in the PM-free scrubber 4 that dissolves and removes SOx, but hardly dissolves or removes PM of the exhaust gas purification equipment, only SO$_x$ is mainly dissolved in the scrubber treatment water, and just a slight amount of PM is dissolved and contained therein, and in the post treatment of scrubber treatment water of the PM-free scrubber 4 that hardly dissolves and removes PM as waste treatment water, SO$_x$ can be treated by using a small-sized treatment device with a small number of simple processes such as neutralization and filtration, which is easily controlled, without requiring the necessity of extremely simplifying or miniaturizing a function of treating PM derived from fuel or lubricating oil, or without the necessity of such a function, by using an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases. Moreover, in the exhaust gas purification equipment, since the exhaust gas is allowed to pass through the PM-free scrubber and formed into a gas in which SO$_x$ is greatly reduced, and then allowed to flow into the SCR, catalyst components (Pt, Pb, Rh, Ir or the like), such as noble metals or the like, carried on a flat plate, a ceramic carrier or the like of the SCR, can be prevented from being catalyst-poisoned by sulfur components, thereby making it possible to suppress lowering in the purifying rate, to provide easiness in device maintenance and a long service life, and to reduce operation costs and the like.

Moreover, by installing the ESP/C/DPF 8 on the upstream side of the PM-free scrubber 4 so as to preliminarily remove PM from the exhaust gas flowing into the PM-free scrubber 4, the dissolution of the PM into the scrubber treatment water in the PM-free scrubber 4 is further reduced, and the post treatment of the waste treatment water is further easily carried out so that it becomes possible to further achieve a small-size, low cost, improved installability, a long service life, low operation costs and the like of the treatment device. Additionally, by installing the cooler 10 on the upstream side of the ESP/C/DPF 8, the temperature of the exhaust gas flowing into the ESP/C/DPF 8 can be decreased; therefore, the PM collecting rate in the ESP/C/DPF 8 can be improved so that the PM flowing into the PM-free scrubber 4 can be further reduced, and the PM in the exhaust gas to be discharged out of the ship can be further reduced, thereby making it possible to make the scrubber treatment water in the PM-free scrubber clearer.

[Main Points of Device of Sixth Example]

(1) By installing the PM-free scrubber 4 on the upstream side of an exhaust pipe, and the SCR 3 is also installed on the downstream side thereof.

- By the installation of the SCR 3, $NO_x$ in the exhaust gas is reduced to $N_2$ and $H_2O$ to greatly reduce the content of $NO_x$ to be detoxified; thus, it becomes possible to discharge an exhaust gas capable of maintaining environmental protection to the atmosphere.
- By the installation of the PM-free scrubber 4, since almost all the $SO_x$ in the exhaust gas is dissolved in scrubber treatment water and removed, it becomes possible to discharge an exhaust gas capable of maintaining environmental protection to the atmosphere.
- In the scrubber treatment water, only $SO_x$ is dissolved, with only small amount of PM being dissolved and contained therein.
- In the post treatment of the scrubber treatment water as waste treatment water, $SO_x$ can be treated by a small-sized treatment device with a small number of simple processes such as neutralization and filtration, which is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and scrubber-through operation is also possible in some cases. However, the PM in the exhaust gas is hardly removed, and discharged as it is.
- Since $SO_x$ is preliminarily removed from the exhaust gas flowing into the SCR 3, catalyst components (Pt, Pb, Rh, Ir or the like), such as noble metals or the like, carried on a flat plate, a ceramic carrier or the like of the SCR can be prevented from being catalyst-poisoned by sulfur components, thereby making it possible to suppress lowering in the purifying rate, to provide easiness in device maintenance and a long service life, and to reduce operation costs and the like.

(2) By installing the ESP/C/DPF on the upstream side of the PM-free scrubber 4, the following effects can be obtained:

- Since almost all the PM in the exhaust gas is removed, with only a small amount thereof being contained, discharge of the exhaust gas capable of maintaining environmental protection into the atmosphere is possible, and the load for a post treatment of the PM-free scrubber treatment water as waste treatment water becomes extremely small.
- By installing the ESP/C/DPF 8 on the upstream side of the SCR 3, it becomes possible to further prevent the SCR catalyst from being clogged by the PM.
- In the scrubber treatment water, only $SO_x$ is dissolved, with only small amount of PM being dissolved and contained therein.
- Particle components, such as PM, metal oxides or the like in the EGR gas, which adversely cause wears, can be almost removed by the ESP/C/DPF 8.

(3) By installing the cooler 10 on the upstream side of the PM-free scrubber 4, the following effects can be obtained:

- The exhaust gas flowing into the ESP/C/DPF 8 can be preliminarily cooled, and by improving the PM collecting rate in the ESP/C/DPF 8, the PM flowing into the PM-free scrubber 4 can be further reduced, and the PM in the exhaust gas to be discharged out of the ship can be further reduced, thereby making it possible to make the scrubber treatment water in the PM-free scrubber clearer.

(4) By installing the heating device 7 on the upstream side of the SCR 3 so as to raise the exhaust gas temperature to an activation temperature or more of the catalyst carried by the SCR 3, it is possible to ensure a reducing function with high efficiency of $NO_x$ in the exhaust gas to $N_2$ and $H_2O$.

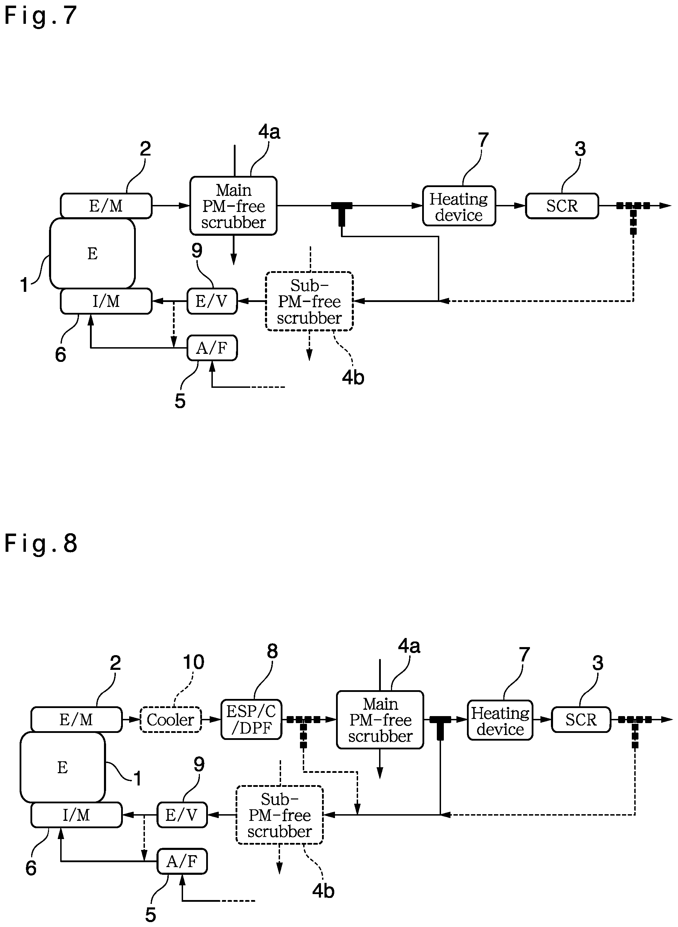

An exhaust gas purification equipment for a marine diesel engine depicted in Figure 7 as a device of a seventh example of the present invention has a configuration in which on an exhaust pipe on the downstream side of an exhaust manifold (E/M) 2 of a diesel engine (E) 1 using low-quality fuel such as fuel oil containing high-concentration sulfur components as its fuel, an SCR 3 that reduces $NO_x$ in exhaust gas into $N_2$ and $H_2O$ so as to greatly reduce the content of $NO_x$ to be detoxified is installed, and on the further downstream side thereof, a main PM-free scrubber 4a that dissolves

$SO_x$ in exhaust gas into treatment water, but hardly dissolves or removes PM into or from the treatment water is installed so that the resulting exhaust gas is discharged onto the downstream side of the scrubber through a muffler (not depicted), and by installing a branching part on either the upstream side or the downstream side of the SCR 3 so as to allow an EGR piping system to be branch-connected thereto so that a branched EGR gas is recirculated into an intake piping system through an EGR valve (E/V) 9; thus, almost all of $SO_x$ that is a gas in the exhaust gas and has a large diffusion coefficient in the order of $1.5 \times 10^{-5}$ ($m^2/s$) is removed, while PM corresponding to particles having a large particle size in the order of 0.01 to 0.5 $\mu$m and a diffusion coefficient that is extremely small by the order of three to six digits, that is, in the order of $10^{-8}$ to $10^{-11}$ ($m^2/s$), is hardly removed, in the main PM-free scrubber. Additionally, the heating device 7 may be installed on the upstream side of the SCR 3 so as to raise the exhaust gas temperature to an activation temperature or more of a catalyst carried by the SCR 3, and a sub-PM-free scrubber 4b that is the same as the main PM-free scrubber 4a may be further installed in the EGR piping system.

[Main Points of Device of Seventh Example]

(1) By installing the main PM-free scrubber 4a on the upstream side of an exhaust pipe, and the SCR 3 is also installed on the downstream side thereof.

- By the installation of the SCR 3, $NO_x$ in the exhaust gas is reduced to $N_2$ and $H_2O$ to greatly reduce the content of $NO_x$ to be detoxified; thus, it becomes possible to discharge an exhaust gas capable of maintaining environmental protection to the atmosphere.
- By the installation of the main PM-free scrubber 4a, since almost all the $SO_x$ in the exhaust gas is dissolved in scrubber treatment water and removed, it becomes possible to discharge an exhaust gas capable of maintaining environmental protection to the atmosphere.
- In the scrubber treatment water, only $SO_x$ is dissolved, with only small amount of PM being dissolved and contained therein.
- In the post treatment of the scrubber treatment water as waste treatment water, $SO_x$ can be treated by a small-sized treatment device with a small number of simple processes such as neutralization and filtration, which is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and scrubber-through operation is also possible in some cases.
- Since $SO_x$ is preliminarily removed from the exhaust gas flowing into the SCR 3, catalyst components (Pt, Pb, Rh, Ir or the like), such as noble metals or the like, carried on a flat plate, a ceramic carrier or the like of the SCR 3 can be prevented from being catalyst-poisoned by sulfur components, thereby making it possible to suppress lowering in the purifying rate, to provide easiness in device maintenance and a long service life, and to reduce operation costs and the like.

(2) By installing the branching part on the downstream side of the main PM-free scrubber 4a or the downstream side of the SCR 3, with the EGR piping system being formed from the branching part, the EGR gas is branched and recirculated to intake air.

- Since the content of $NO_x$ in the exhaust gas is reduced, the amount of $NO_x$ to be reduced by the SCR 3 is reduced so that the load on the SCR catalyst is lightened and the SCR 3 is small-sized; thus, it becomes possible to improve the installability and controllability of the device, and also to reduce both of the initial costs and running costs, such as the reduction of the amount of use of reducing agents, such as ammonia, aqueous ammonia, urea water, or the like.
- By a synergistic effect by the combination of the EGR system and SCR, the content of $NO_x$ is further reduced in the atmosphere-discharged exhaust gas so that an exhaust gas capable of maintaining environmental protection can be prepared.

(3) When the EGR piping system is branched from the downstream side of the main PM-free scrubber 4a, the following effects can be obtained:

- Since the EGR gas hardly contains any $SO_x$, corrosions and wears in the engine components, such as a piston, a piston ring, a cylinder, a cylinder head, a supply/exhaust valve, a valve stem and the like, are reduced, and it is possible to improve those members by eliminating the possibility of deteriorating the durability; therefore, inexpensive materials can be used.

- Since the EGR gas hardly contains any $SO_x$, corrosions in the supply/exhaust related parts, such as EGR piping, an EGR valve, a blower, a compressor wheel of a turbocharger, an intercooler, an intake pipe, an intake manifold and the like, can be reduced and it becomes possible to improve those members by eliminating the possibility of deteriorating the durability; therefore, inexpensive materials can be used.

(4) The sub-PM-free scrubber 4b that removes $SO_x$ contained in the EGR gas, but hardly removes PM is installed in the EGR piping system.

- Since the EGR gas hardly contains any $SO_x$, corrosions and wears in the engine components, such as a piston, a piston ring, a cylinder, a cylinder head, a supply/exhaust valve, a valve stem and the like, are reduced, and it is possible to improve those members by eliminating the possibility of deteriorating the durability; therefore, inexpensive materials can be used.
- In the scrubber treatment water, only $SO_x$ is dissolved, with only small amount of PM being dissolved and contained therein.
- In the post treatment of scrubber treatment water as waste treatment water, $SO_x$ can be treated by using a small-sized treatment device with a small number of simple processes such as neutralization and filtration, which is easily controlled, without requiring a large-scale treatment function of treating PM by using an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases.

(5) By installing the heating device 7 on the upstream side of the SCR 3 so as to raise the temperature of the exhaust gas to an activation temperature or more of a catalyst carried by the SCR 3, it is possible to ensure a highly efficient reducing operation of $NO_x$ in the exhaust gas into $N_2$ and $H_2O$.

- When the flow velocity of the exhaust gas is slow, with long staying time inside the SCR 3, the exhaust gas is heated by the heating device 7 to about 230°C to 450°C, and when the flow velocity of the exhaust gas is fast, with short staying time inside the SCR 3, the exhaust gas is heated to about 360°C to 450°C.
- As the heating device 7, an electric heater may be solely used or a fuel-injection device and an ignition device may be used in combination, or an electric heater and an oxidizing catalyst may be used in combination, and when the oxidizing catalyst is used in combination with the heating device, the PM in the exhaust gas can be oxidized so as to be reduced and removed therefrom.

An exhaust gas purification equipment for a marine diesel engine depicted in Figure 8 as a device of an eighth example of the present invention has a configuration in which on an exhaust pipe on the downstream side of an exhaust manifold (E/M) 2 of a diesel engine (E) 1 using low-quality fuel such as fuel oil containing high-concentration sulfur components as its fuel, an SCR 3 that reduces $NO_x$ in exhaust gas into $N_2$ and $H_2O$ so as to greatly reduce the content of $NO_x$ to be detoxified is installed, and on the upstream side thereof, a main PM-free scrubber 4a that dissolves $SO_x$ in exhaust gas into treatment water, but hardly dissolves or removes PM into or from the treatment water is installed so that the resulting exhaust gas is discharged onto the downstream side of the SCR 3 through a muffler (not shown), and by installing a branching part on either the upstream side or the downstream side of the main PM-free scrubber 4a or the downstream side of the SCR 3 so as to allow an EGR piping system to be branch-connected thereto so that an EGR gas is branched and the EGR gas is recirculated into an intake piping system through an EGR valve (E/V) 9; thus, in the PM-free scrubber, almost all of $SO_x$ that is a gas in the exhaust gas and has a large diffusion coefficient in the order of $1.5 \times 10^{-5}$ (m²/s) is removed, while PM corresponding to particles having a large particle size in the order of 0.01 to 0.5 $\mu$m and a diffusion coefficient that is extremely small by the order of three to six digits, that is, in the order of $10^{-8}$ to $10^{-11}$ (m²/s), is hardly removed, and an ESP/C/DPF 8 is installed in an exhaust pipe in a gap relative to the main PM-free scrubber 4a, located right below the exhaust manifold (E/M) 2. Additionally, the heating device 7 may be installed on the upstream side of the SCR 3 so as to raise the exhaust gas temperature to an activation temperature or more of a catalyst carried by the SCR 3, and a sub-PM-free scrubber 4b that is the same as the above-mentioned PM-free scrubber 4a may be installed in the EGR piping system.

[Main Points of Device of Eighth Example]

(1) By installing the main PM-free scrubber 4a on the upstream side of an exhaust pipe, and the SCR 3 is also installed on the downstream side thereof.

- By the installation of the SCR 3, $NO_x$ in the exhaust gas is reduced to $N_2$ and $H_2O$ to greatly reduce the content of $NO_x$ to be detoxified; thus, it becomes possible to discharge an exhaust gas capable of maintaining environmental protection to the atmosphere.
- By the installation of the main PM-free scrubber 4a, since almost all the $SO_x$ in the exhaust gas is dissolved in scrubber treatment water and removed, it becomes possible to discharge an exhaust gas capable of maintaining environmental protection to the atmosphere.
- In the scrubber treatment water, only $SO_x$ is dissolved, with only small amount of PM being dissolved and contained therein.
- In the post treatment of the scrubber treatment water as waste treatment water, $SO_x$ can be treated by a small-sized treatment device with a small number of simple processes such as neutralization and filtration, which is easily controlled, without requiring a large-scale treatment function of treating PM by an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and scrubber-through operation is also possible in some cases.
- Since $SO_x$ is preliminarily removed from the exhaust gas flowing into the SCR 3, catalyst components (Pt, Pb, Rh, Ir or the like), such as noble metals or the like, carried on a flat plate, a ceramic carrier or the like of the SCR 3 can be prevented from being catalyst-poisoned by sulfur components, thereby making it possible to suppress lowering in the purifying rate, to provide easiness in device maintenance and a long service life, and to reduce operation costs and the like.

(2) By installing the ESP/C/DPF on the upstream side of the main PM-free scrubber 4a, the following effects can be obtained:

- Since almost all the PM in the exhaust gas is removed by the ESP/C/DPF 8, with only a small amount thereof being contained, discharge of the exhaust gas capable of maintaining environmental protection to the atmosphere is possible, and the load for a post treatment of the PM-free scrubber treatment water as waste treatment water becomes extremely small.
- By installing the ESP/C/DPF 8 on the upstream side of the SCR 3, it becomes possible to further prevent the SCR catalyst from being clogged by the PM.
- In the scrubber treatment water, only $SO_x$ is dissolved, with only small amount of PM being dissolved and contained therein.
- By the ESP/C/DPF 8, particle components, such as PM, metal oxides or the like in the EGR gas, which adversely cause wears, can be removed more effectively.

(3) By installing the cooler 10 on the upstream side of the ESP/C/DPF 8, the following effects can be obtained:

- The exhaust gas flowing into the ESP/C/DPF can be preliminarily cooled, and by increasing the PM collecting rate in the ESP/C/DPF, the PM flowing into the main PM-free scrubber 4a can be further reduced and the PM in the exhaust gas to be discharged overboard from the ship can be further reduced so that the scrubber treatment water in the PM-free scrubber can be made clearer.

(4) By installing a branching part on either the upstream side or the downstream side of the main PM-free scrubber, or the downstream side of the SCR, the EGR piping system is formed from the branching part, and the EGR gas is branched and recirculated to intake air.

- The combustion temperature in the combustion chamber is lowered so as to suppress the generation of $NO_x$ at its combustion stage so that the $NO_x$ content in the exhaust gas flowing into the SCR is preliminarily reduced, and along with the preliminarily reduced content of $NO_x$ in the exhaust gas, the amount of $NO_x$ to be reduced in the SCR is reduced; thus, the load of the reduction amount of the SCR catalyst is lightened so that it becomes possible to improve purifying rate, and to miniaturize the SCR so as to improve the installability and controllability of the device, and also to reduce both of the initial costs and running costs, such as the reduction of the amount of use of reducing agents, such as ammonia, aqueous ammonia, urea water, or the like.
- By a synergistic effect by the combination of the EGR system and SCR, the content of $NO_x$ is further reduced in the atmosphere-discharged exhaust gas so that an exhaust gas capable of maintaining environmental protection can be prepared.

(5) When the EGR piping system is branched from the downstream side of the main PM-free scrubber, the following effects can be obtained:

- Since the EGR gas hardly contains any of PM and $SO_x$, corrosions in the supply/exhaust related parts, such as EGR piping, an EGR valve, a blower, a compressor wheel of a turbocharger, an intercooler, an intake pipe, an intake manifold and the like, can be reduced and it becomes possible to improve those members by eliminating the possibility of deteriorating the durability; therefore, inexpensive materials can be used.
- Since the EGR gas hardly contains any of PM and $SO_x$, corrosions in the supply/exhaust related parts, such as EGR piping, an EGR valve, a blower, a compressor wheel of a turbocharger, an intercooler, an intake pipe, an intake manifold and the like, can be reduced and it becomes possible to improve those members by eliminating the possibility of deteriorating the durability; therefore, inexpensive materials can be used.

(6) The sub-PM-free scrubber that hardly removes PM contained in the EGR gas is installed in the EGR piping.

- Since the EGR gas hardly contains any of PM and $SO_x$, corrosions in the supply/exhaust related parts, such as EGR piping, an EGR valve, a blower, a compressor wheel of a turbocharger, an intercooler, an intake pipe, an intake manifold and the like, can be reduced and it becomes possible to improve those members by eliminating the possibility of deteriorating the durability; therefore, inexpensive materials can be used.
- In the scrubber treatment water, only $SO_x$ is dissolved, with only small amount of PM being dissolved and contained therein.
- In the post treatment of scrubber treatment water as waste treatment water, $SO_x$ can be treated by using a small-sized treatment device with a small number of simple processes such as neutralization and filtration, which is easily controlled, without requiring a large-scale treatment function of treating PM by using an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases.

(7) By installing the heating device on the upstream side of the SCR so as to raise the temperature of the exhaust gas to an activation temperature or more of a catalyst carried by the SCR, it is possible to ensure a highly efficient reducing operation of $NO_x$ in the exhaust gas into $N_2$ and $H_2O$.

- Even in the case when the exhaust gas temperature is low, for example, upon engine start or the like, it is possible to ensure a reducing function with high efficiency of $NO_x$ in the exhaust gas to $N_2$ and $H_2O$.
- When an electric heater is solely used as the heating device, its control is easily carried out, and in the case when a fuel-injection device and an ignition device are used in combination, since power consumption is small, the energy efficiency becomes better as a whole, or alternatively, by using an electric heater and an oxidizing catalyst in combination, oxidizing reaction heat may be utilized, and when the oxidizing catalyst is used in combination, the PM in the exhaust gas can be oxidized so as to be reduced and removed therefrom.

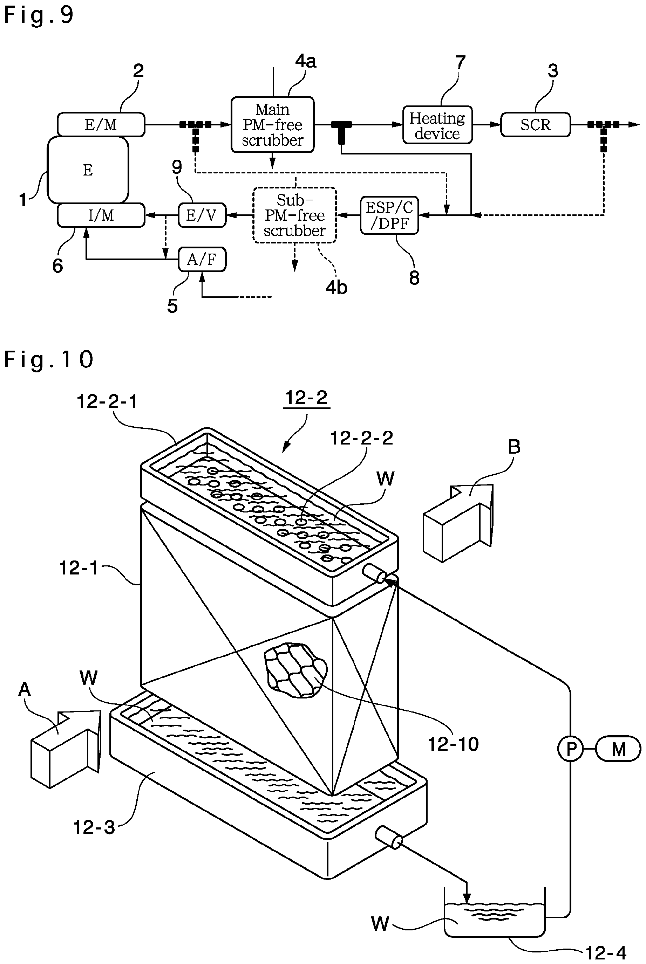

An exhaust gas purification equipment for a marine diesel engine depicted in Figure 9 as a device of a ninth example of the present invention has a configuration in which on an exhaust pipe on the downstream side of an exhaust manifold (E/M) 2 of a diesel engine (E) 1 using low-quality fuel such as fuel oil containing high-concentration sulfur components as its fuel, an SCR 3 that reduces $NO_x$ in exhaust gas into $N_2$ and $H_2O$ so as to greatly reduce the content of $NO_x$ to be detoxified is installed, and on the upstream side thereof, a main PM-free scrubber 4a that dissolves $SO_x$ in exhaust gas into treatment water, but hardly dissolves or removes PM into or from the treatment water is installed so that the resulting exhaust gas is discharged onto the downstream side of the SCR 3 through a muffler (not shown), and by installing a branching part on either the upstream side or the downstream side of the main PM-free scrubber 4a or the downstream side of the SCR 3 so as to allow an EGR piping system to be branch-connected thereto so that an EGR gas is branched and the EGR gas is recirculated into an intake piping system through an EGR valve (E/V) 9; thus, in the main PM-free scrubber, almost all of $SO_x$ that is a gas in the exhaust gas and has a large diffusion coefficient in the order of $1.5 \times 10^{-5}$ ($m^2$/s) is removed, while PM corresponding to particles having a large particle size in the order of 0.01 to 0.5 $\mu$m and a diffusion coefficient that is extremely small by the order of three to six digits, that is, in the order of $10^{-8}$ to $10^{-11}$ ($m^2$/s), is hardly removed, and an ESP/C/DPF 8 is installed in the EGR piping system. Additionally, a sub-PM-free scrubber 4b that is the same as the above-mentioned main PM-free scrubber 4a may be installed on the downstream side of the ESP/C/DPF 8 of the EGR piping system.

[Main Points of Device of Ninth Example]

(1) By installing the main PM-free scrubber 4a on the upstream side of an exhaust pipe, and the SCR 3 is also installed on the downstream side thereof.

- By the installation of the SCR 3, $NO_x$ in the exhaust gas is reduced to $N_2$ and $H_2O$ to greatly reduce the content of $NO_x$ to be detoxified; thus, it becomes possible to discharge an exhaust gas capable of maintaining environmental protection to the atmosphere.
- By the installation of the main PM-free scrubber 4a, since almost all the $SO_x$ in the exhaust gas is dissolved in scrubber treatment water and removed, it becomes possible to discharge an exhaust gas capable of maintaining environmental protection to the atmosphere.
- In the scrubber treatment water, only $SO_x$ is dissolved, with only small amount of PM being dissolved and contained therein.
- In the post treatment of scrubber treatment water as waste treatment water, $SO_x$ can be treated by using a small-sized treatment device with a small number of simple processes such as neutralization and filtration, which is easily controlled, without requiring a large-scale treatment function of treating PM by using an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases.
- Since $SO_x$ is preliminarily removed from the exhaust gas flowing into the SCR 3, catalyst components (Pt, Pb, Rh, Ir or the like), such as noble metals or the like, carried on a flat plate, a ceramic carrier or the like of the SCR 3 can be prevented from being catalyst-poisoned by sulfur components, thereby making it possible to suppress lowering in the purifying rate, to provide easiness in device maintenance and a long service life, and to reduce operation costs and the like.

(2) By installing a branching part on either the upstream side or the downstream side of the main PM-free scrubber 4a, or the downstream side of the SCR 3, the EGR piping system is formed from the branching part, and the EGR gas is branched and recirculated to intake air.

- The combustion temperature in the combustion chamber is lowered so as to suppress the generation of $NO_x$ at its combustion stage so that the $NO_x$ content in the exhaust gas flowing into the SCR is preliminarily reduced, and along with the preliminarily reduced content of $NO_x$ in the exhaust gas, the amount of $NO_x$ to be reduced in the SCR is reduced; thus, the load of the reduction amount of the SCR catalyst is lightened so that it becomes possible to improve purifying rate, and to miniaturize the SCR so as to improve the installability and controllability of the device, and also to reduce both of the initial costs and running costs, such as the reduction of the amount of use of reducing agents, such as ammonia, aqueous ammonia, urea water, or the like.
- By a synergistic effect by the combination of the EGR system and SCR, the content of $NO_x$ is further reduced in the atmosphere-discharged exhaust gas so that an exhaust gas capable of maintaining environmental protection can be prepared.

(3) When the EGR piping system is branched from the downstream side of the main PM-free scrubber 4a, the following effects can be obtained:

- Since the scrubber treatment water of the sub-PM-free scrubber 4b also has only sulfur components dissolved therein, with only small amount of PM being dissolved and contained therein, the post treatment as waste treatment water can be easily carried out.
- Since $SO_x$ is preliminarily removed from the exhaust gas flowing into the SCR 3, catalyst components (Pt, Pb, Rh, Ir or the like), such as noble metals or the like, carried on a flat plate, a ceramic carrier or the like of the SCR 3 can be prevented from being catalyst-poisoned by sulfur components, thereby making it possible to suppress lowering in the purifying rate, to provide easiness in device maintenance and a long service life, and to reduce operation costs and the like.

(4) The sub-PM-free scrubber 4b that hardly removes PM contained in the EGR gas is installed in the EGR piping.

- Since the EGR gas hardly contains any of PM and $SO_x$, corrosions in the supply/exhaust related parts, such as EGR piping, an EGR valve, a blower, a compressor wheel of a turbocharger, an intercooler, an intake pipe, an intake manifold and the like, can be reduced and it becomes possible to improve those members by eliminating the possibility of deteriorating the durability; therefore, inexpensive materials can be used.

- In the scrubber treatment water, only $SO_x$ is dissolved, with only small amount of PM being dissolved and contained therein.
- In the post treatment of scrubber treatment water as waste treatment water, $SO_x$ can be treated by using a small-sized treatment device with a small number of simple processes such as neutralization and filtration, which is easily controlled, without requiring a large-scale treatment function of treating PM by using an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases

(5) By installing the ESP/C/DPF 8 on the upstream side of the sub-PM-free scrubber 4b, the following effects can be obtained:

- Since almost all the PM in the exhaust gas is removed by the ESP/C/DPF 8, with only small amount thereof being contained, wears in the engine components, such as a piston, a piston ring, a cylinder, a cylinder head, a supply/exhaust valve, a valve stem and the like, are reduced, and it is possible to improve those members by eliminating the possibility of deteriorating the durability; therefore, inexpensive materials can be used, and the drain treatment load of the PM-free scrubber treatment water can be extremely lightened.
- In the scrubber treatment water, only $SO_x$ is dissolved, with only small amount of PM being dissolved and contained therein.
- In the post treatment of scrubber treatment water as waste treatment water, $SO_x$ can be treated by using a small-sized treatment device with a small number of simple processes such as neutralization and filtration, which is easily controlled, without requiring a large-scale treatment function for PM by using an expensive, large-sized treatment device including a control unit with complex, sophisticated control and having low installation flexibility (including a storage facility for preventing treated waste water containing oil from being discharged to the ocean); therefore a discharging operation to the ocean is possible even during sailing in and outside special sea areas, and a scrubber-through operation is also possible in some cases.

(6) By installing the heating device 7 on the upstream side of the SCR 3 so as to raise the temperature of the exhaust gas to an activation temperature or more of a catalyst carried by the SCR, it is possible to ensure a highly efficient reducing operation of $NO_x$ in the exhaust gas into $N_2$ and $H_2O$.

- Even in the case when the exhaust gas temperature is low, for example, upon engine start or the like, it is possible to ensure a reducing function with high efficiency of $NO_x$ in the exhaust gas to $N_2$ and $H_2O$.
- When an electric heater is solely used as the heating device, its control is easily carried out, and in the case when a fuel-injection device and an ignition device are used in combination, since power consumption is small, the energy efficiency becomes better as a whole, or alternatively, by using an electric heater and an oxidizing catalyst in combination, oxidizing reaction heat may be utilized, and when the oxidizing catalyst is used in combination, the PM in the exhaust gas can be oxidized so as to be reduced and removed therefrom.

Moreover, the PM-free scrubber, which hardly dissolves and removes PM and is used in the present invention, is installed in a passage for the exhaust gas or the EGR gas, as described earlier, and as the PM scrubber, for example, those shown in Figures 10 to 13 may be adopted.

The PM-free scrubber shown in Figure 10 has a structure in which by laminating a desired number of honeycomb cores, each having a honeycomb structure (for example, 250 mm in length $\times$ 250 mm in width $\times$ 100 mm in depth (manufactured by Nichias Corporation, product name; Honeycomb Washer)) in which wave plates and flat plates, which are made of preferably a porous ceramic-made material with excellent water absorbency, and use glass fiber, carbon fiber, aramid fiber, or the like, as a skeleton, are alternately multilayered, with tunnel-shaped exhaust gas passages having fine cross sections and formed by the flat plates and wave plates being diagonally extended, so as to be installed as a honeycomb unit core part 12-1, and a water supply unit 12-2, made of a water supply nozzle or a water supply duct, is formed above the honeycomb unit core part 12-1 so as to substantially uniformly supply water over the full width and length of the honeycomb unit core part 12-1 and used for supplying water thereto, and supplied scrubber treatment water (washing water) W is allowed to flow down, while wetting the surface of each of the fine flow passages diagonally extending in the honeycomb unit core part 12-1 to reach an under tray 12-3 formed on the lower portion of the honeycomb unit core part with substantially the same length and width, and then housed in a post treatment water tank 12-4 (system water amount: 20L), and the scrubber treatment water W is designed to be sent from a tank to the water supply unit 12-2 by a pump P so as to keep the wet state of the surface of each of the fine flow passages without being dried up (water flow speed: about 35 L/min) for circulated use. In the drawing, 12-2-1 denotes a water spray tank, 12-2-2 denotes a nozzle aperture, an arrow A denotes exhaust gas or EGR gas, an arrow B denotes exhaust gas from which S components have been removed (with almost all PM remaining therein), M denotes a motor for driving the pump P, and W denotes scrubber treatment water.

In the case of this PM-free scrubber, the exhaust gas or EGR gas diagonally proceeds over the honeycomb unit core part 12-1 and only smoothly flows in contact with and along a portion near the wet surface of the wall surface of each of the fine flow passages, and unlike a normal scrubber, the exhaust gas hardly crosses and collides with the surface of the treatment water W fiercely, but flows as being calmly in contact with and along the surface; therefore, since mutual mixture does not occur, $SO_x$ as a gas in exhaust gas or EGR gas components, which has a large diffusion coefficient and high affinity with water, and is easily absorbed therein, is dissolved into its treatment water; however, PM, which has a large particle diameter and an extremely small diffusion coefficient, only flows and passes through, while being hardly dissolved into treatment water, with the result that the exhaust gas and the EGR gas are discharged, with $SO_x$ positively removed therefrom, while most of PM corresponding to particles are left and contained therein. Since although $SO_x$ is contained, hardly any PM is contained in the scrubber treatment water, discharge of the treatment water to the ocean is possible by using few treatments, even during sailing in and outside special sea areas, and in particular, processing of discharging treatment water on board becomes easier remarkably, control of the treatment device is simplified to decrease the size of the device, the layout ability is enhanced, and an inexpensive facility can be provided. Furthermore, scrubber-through operation is possible in some cases.

Moreover, as another type having a structure similar to that of the above PM-free scrubber, a honeycomb unit core part, which is configured by laminating honeycomb unit cores in a honeycomb structure, each of which is formed by performing a corrugating process on flat plates or embossed plates made of a stainless net plate material formed by knitting austenitic stainless steel thin-plate material or austenitic stainless thin lines, such as SUS316 or the like, into a mesh state in plain weave or twill weave so as to be formed into a wave plate shape having a diagonally extending pattern, or by laminating these wave plates so as to make the diagonally extending directions alternately cross each other diagonally, so as to allow tunnel-shaped fine flow passages to diagonally extend, or by laminating honeycomb unit cores in a honeycomb structure, each of which is formed by carrying out a corrugating process on the flat plate so as to have a wave plate shape having diagonally extending pattern, and upon laminating the flat plates so as to make the diagonally extending directions alternately cross each other, the flat plate is laminated therebetween so that tunnel-shaped fine flow passages formed by the wave plate and flat plate that diagonally cross each other are allowed to diagonally extend, is adopted (not shown in the Figure). In the same manner as in the honeycomb core structure made of porous ceramic material, the PM-free scrubber that adopts the above-mentioned honeycomb unit core part only allows the exhaust gas or the EGR gas to diagonally proceed through the honeycomb unit core part, to be made in contact with the vicinity of the surface of the wall surface of each of the fine flow passages, and to smoothly flow along the surface; therefore, unlike a normal scrubber (a jet scrubber, a venturi scrubber, or a spray tower), the exhaust gas hardly crosses and collides with the surface of the scrubber treatment water fiercely, but only flows calmly along the surface; thus, since mutual mixture does not occur, among the exhaust gas or EGR gas components, $SO_x$ which has high affinity with water and is easily absorbed is dissolved into its treatment water, but PM corresponding to particles without affinity with water is hardly dissolved into the treatment water. Since this treatment water contains $SO_x$, but does not contain PM, it becomes possible to carry out a discharging operation of the treatment water to the ocean, even during sailing in and outside special sea areas, and processing of discharging treatment water on board becomes easier remarkably, control of the treatment device is simplified to decrease the size of the device, the layout ability is enhanced, and an inexpensive facility can be provided. Furthermore, scrubber-through operation is possible in some cases.

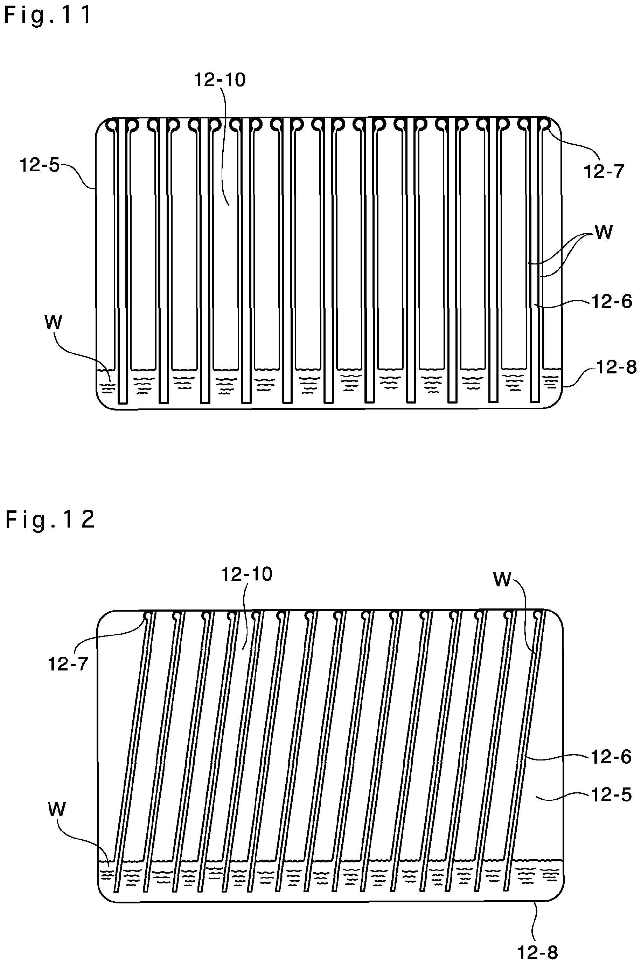

A PM-free scrubber shown in Figure 11 has a configuration in which inside a scrubber housing 12-5 formed in the exhaust gas or EGR gas passage, many flat-plate-shaped treatment plates 12-6 that are made of a thin-plate material made of austenitic stainless steel, or a stainless mesh-plate material such as SUS316L, and formed by knitting austenitic stainless steel lines into a net shape in plane weave or twill weave, are disposed in a longitudinally vertical direction substantially in parallel with the gas flow, with narrow intervals being kept therebetween, and on the upper end of each of the treatment plates 12-6, a treatment water supply nozzle 12-7 is formed so as to wet entirely both <u>wall</u> surfaces of each of the treatment plates, with a tank unit 12-8 being formed on the lower end of each treatment plate, so that the scrubber treatment water (washing water) W is circulated by piping (not shown) and a circulation pump (not shown) driven by a motor so as to flow down the entire of the front and rear <u>wall</u> surfaces of the treatment plate 12-6 so as to always keep them in a wet state. Reference numeral 12-10 depicts an exhaust gas or EGR gas passage.

The exhaust gas and EGR gas to be treated by this PM-free scrubber are simply made to smoothly flow down along near the surfaces of water that flows down the <u>wall</u> surfaces of the treatment plates 12-6 that are always kept in a wet state; therefore, unlike a normal scrubber, the exhaust gas hardly crosses and collides with the surface of the water thin-film layer of the treatment water fiercely, but flows calmly with being made in contact with and along the surface, so that mutual mixture does not occur; thus, $SO_x$ contained as a gas in exhaust gas or EGR gas components, which has a large diffusion coefficient with high affinity with water and is easily absorbed, is dissolved into its treatment water, but PM corresponding to particles having a large particle diameter and a small diffusion coefficient without affinity with water is hardly dissolved into the treatment water. Since this treatment water contains $SO_x$, but hardly contains PM, it becomes possible to carry out a discharging operation of the treatment water to the ocean, even during sailing in and outside special sea areas, and in particular, processing of discharging treatment water on board becomes easier remarkably, control of the treatment device is simplified to decrease the size of the device, the layout ability is enhanced, and an inexpensive facility can be provided. Furthermore, scrubber-through operation is possible in some cases.

A PM-free scrubber shown in Figure 12, which is a modified example of the PM-free scrubber shown in Figure 11, has a configuration in which inside a scrubber housing 12-5 formed in the exhaust gas or EGR gas passage, many flat-plate-shaped treatment plates 12-6 are disposed so as to be tilted in a vertical direction, with narrow intervals being kept therebetween substantially in parallel with the gas flow, and on the upper end on the upper surface of tilted wall surfaces of each of the treatment plates 12-6, a treatment water supply nozzle 12-7 is formed so as to wet the entire surface of the upper surface of each treatment plate, with a tank unit 12-8 being formed on the lower end of each treatment plate, so that the scrubber treatment water (washing water) W is circulated by piping (not shown) and a circulation pump (not shown) driven by a motor so as to flow down the entire of the upper surface of the tilted wall surfaces of each of the treatment plates 12-6 so as to always keep them in a wet state. Reference numeral 12-10 depicts an exhaust gas or EGR gas passage.

Since the exhaust gas and EGR gas to be treated by this PM-free scrubber are simply made to smoothly flow down along near the surfaces of water that flows down the upper surfaces of the treatment plates 12-6 that are always kept in a wet state, unlike a normal scrubber, the exhaust gas hardly crosses and collides with the surface of the treatment water fiercely, but flows calmly with being made in contact along with the surface, so that mutual mixture does not occur; thus, $SO_x$ contained as a gas in exhaust gas or EGR gas components, which has a high diffusion coefficent with high affinity with water and is easily absorbed, is dissolved into its treatment water, but PM corresponding to particles a large particle diameter and a small diffusion coefficient without affinity with water is hardly dissolved into the treatment water. Moreover, since the treatment plate 12-6 is tilted in a vertical direction, and since the treatment water supply nozzle 12-7 is provided only on the upper end of the upper surface of the tilted wall surfaces of each of the treatment plates 12-6 so as to wet entirely the upper surface of each treatment plate, for example, even when the ship's body shakes to cause a slight shake in the treatment water flow flowing out from the treatment water supply nozzle 12-7, crossing, collisions or the like of the PM into treatment water caused by scattering of the treatment water hardly occur so that the wetting process onto the entire of the upper wall surfaces of the treatment plates 12-6 can be carried out easily and positively. In the same manner as in the above-mentioned scrubber, in this PM-free scrubber of the treatment plate tilting type also, its treatment water contains hardly any PM corresponding to particles, although it contains $SO_x$; therefore, it becomes possible to carry out a discharging operation of the treatment water to the ocean, even during sailing in and outside special sea areas, and in particular, processing of discharging treatment water on board becomes easier remarkably, control of the treatment device is simplified to decrease the size of the device, the layout ability is enhanced, and an inexpensive facility can be provided. Furthermore, scrubber-through operation is possible in some cases.

Additionally, the surface shape of the above-mentioned treatment plate 12-6 made of an austenitic stainless thin-plate material such as SUS316L or a stainless mesh-plate material knitted into a mesh state in plain weave or twill weave by using austenitic stainless steel thin lines is not limited by the flat plate shape, and any of a corrugated plate (not depicted) with waveforms molded in a direction in which the treatment water flows down, a corrugated plate (not depicted) with waveforms molded in a direction in which the exhaust gas or EGR gas flows, a corrugated plate (not depicted) with waveforms molded in a direction crossing the direction in which the treatment water flows down, and an embossed treatment plate (not depicted) with concavo-convex portions in both of the direction in which the treatment water flows down and the direction in which the exhaust gas/EGR gas flows can be selected for use. In these treatment plates also, unlike a normal scrubber, the exhaust gas hardly crosses and collides with the surface of the treatment water fiercely, but only calmly flows along and in contact with the surface; therefore, mutual mixture does not occur.

A PM-free scrubber depicted in Figure 13 is configured to have, in a scrubber housing (not depicted) installed in an exhaust gas or EGR gas passage, an endless belt 12-12 that is fibrous and has absorbency is disposed in a serpentine shape (meandering shape) between driving rolls 12-13 installed on a lower portion and driven rolls 12-14 formed on both upper and lower portions in a treatment water tank 12-11, and by piping (not depicted) and a circulation pump (not depicted) driven by a motor, treatment water W inside the treatment tank 12-11 is allowed to flow down right under the driven rolls 12-14 installed on the upper portions of the two surfaces of the front and rear surfaces of the endless belt 12-12 so that the entire surfaces of the front and rear surfaces are always wetted. Additionally, in the case when the driving rolls 12-13 and the driven rolls 12-14 installed on the lower portions thereof are designed to be installed below the water surface of the treatment water W inside the treatment water tank 12-11, it becomes possible to preferably wet the two surfaces of the endless belt 12-12 positively.

Also in the case of this PM-free scrubber, unlike a normal scrubber, the exhaust gas hardly crosses or collides with the surface of the water thin-film layer of the scrubber treatment water fiercely, but only calmly flows along a portion near the water thin-film layer of the surface of the endless belt 12-12; therefore, mutual mixture does not occur so that $SO_x$ contained as a gas in exhaust gas or EGR gas components, which has a large particle diameter and a small diffusion coefficient with high affinity with water and is easily absorbed, is dissolved into its treatment water, but PM corresponding to particles having a large particle size and small diffusion coefficent without affinity with water, is hardly dissolved into the treatment water. Therefore, since this treatment water contains $SO_x$, but hardly contains PM, it becomes possible to carry out a discharging operation of the treatment water to the ocean, even during sailing in and outside special sea areas, and in particular, processing of discharging treatment water on board becomes easier remarkably, control of the treatment device is simplified to decrease the size of the device, the layout ability is enhanced, and an inexpensive facility can be provided. Furthermore, scrubber-through operation is possible in some cases.

Also, as another type having a structure similar to that of the PM-free scrubber depicted in Figure 13, in place of the endless belt 12-12 with fiber absorbency, there is a type which adopts an endless belt made of a thin-plate of austenitic stainless steel, such as SUS316L, or a thinner austenitic stainless steel knitted into a mesh state in plain weave or twill weave by using a foil-shaped material or thin lines into a mesh shape whose mesh lines get wet and expanded by capillary phenomenon (not depicted). It goes without saying that, also in the PM-free scrubber adopting this endless belt made of a mesh material made of austenitic stainless steel, such as SUS316L, or the like, it is possible to obtain operations and effects similar to those of the scrubber adopting the endless belt 12-12 with fiber absorbency.

Reference Signs List

| | |
|---|---|
| 1... | diesel engine (E) |
| 2... | exhaust manifold (E/M) |
| 3... | SCR |
| 4... | PM-free scrubber |
| 4a... | main PM-free scrubber |
| 4b... | sub-PM-free scrubber |
| 5... | air filter (A/F) |
| 6... | intake manifold (I/M) |
| 7... | heating device |
| 8... | ESP/C/DPF |
| 9... | EGR valve (E/V) |
| 10... | cooler |
| 12-1... | honeycomb unit core part |
| 12-2... | water supply unit |
| 12-2-1... | water supply tank |
| 12-2-2... | nozzle aperture |
| 12-3... | under tray |
| 12-4, 12-11... | treatment water tank |

| | |
|---|---|
| 12-5... | scrubber housing |
| 12-6... | treatment plate |
| 12-7... | water supply nozzle |
| 12-8... | tank unit |
| 12-10... | <u>exhaust gas or EGR gas</u> passage |
| 12-12... | endless belt |
| 12-13... | driving roll |
| 12-14... | driven roll |
| W... | (scrubber) treatment water |
| P... | pump |
| M... | motor |
| 21... | parallel treatment plate |
| 22... | scrubber treatment water |
| 23... | sulfate ion |
| 24... | PM |
| 25... | $SO_2$ |

## Claims

1. An exhaust gas purification equipment for a marine diesel engine (1) using low-quality fuel such as fuel oil containing high-concentration sulfur components, the exhaust gas purification equipment comprising:

   a selective catalytic reduction device (3) (hereinafter, referred to as "SCR") installed in an exhaust pipe connected to an engine exhaust manifold (2); and
   a PM-free scrubber (4) disposed on a downstream side of the SCR (3), **characterized in that** the PM-free scrubber (4) removes no particulate matters (hereinafter, referred to as "PM") mainly composed of carbon and contained in exhaust gas by utilizing a difference in diffusion speed between gas and particles and because the exhaust gas does not fiercely collide with a surface of a thin-film layer formed of treatment water (W) which is always supplied to flow down along each of wall surfaces constituting the PM-free scrubber (4), but smoothly flows along near the surface of the water thin-film layer.

2. The exhaust gas purification equipment for a marine diesel engine (1) using low-quality fuel such as fuel oil containing high-concentration sulfur components according to claim 1, further comprising:
   an electric precipitation means (8) for removing the PM, disposed on an upstream side of either the SCR (3) or the PM-free scrubber (4).

3. The exhaust gas purification equipment for a marine diesel engine (1) using low-quality fuel such as fuel oil containing high-concentration sulfur components according to claim 1 or 2, further comprising:

   a branching part for causing part of the exhaust gas to branch as EGR gas, disposed on an exhaust pipe on an upstream side of the SCR (3), on the downstream side of the SCR (3), or on a downstream side of the PM-free scrubber (4),

wherein the EGR gas is recirculated to intake air of the engine (1) through an EGR piping system connected to the branching part.

4. The exhaust gas purification equipment for a marine diesel engine (1) using low-quality fuel such as fuel oil containing high-concentration sulfur components according to claim 3, further comprising:
a sub-PM-free scrubber (4b) disposed in the EGR piping system, the sub-PM-free scrubber (4b) removing no PM contained in the EGR gas by utilizing a difference in diffusion speed between gas and particles and because the exhaust gas does not fiercely collide with a surface of a thin-film layer formed of treatment water (W) which is always supplied to flow down along each of wall surfaces constituting the sub-PM-free scrubber (4), but smoothly flows along near the surface of the water thin-film layer.

5. The exhaust gas purification equipment for a marine diesel engine (1) using low-quality fuel such as fuel oil containing high-concentration sulfur components according to claim 3 or 4, wherein the electric precipitation means for removing the PM is disposed in the exhaust pipe on the upstream side of the SCR (3).

6. The exhaust gas purification equipment for a marine diesel engine (1) using low-quality fuel such as fuel oil containing high-concentration sulfur components according to claim 4, wherein the electric precipitation means for removing the PM is disposed in the EGR piping system on an upstream side of the sub-PM-free scrubber (4b) exhaust pipe.

7. An exhaust gas purification equipment for a marine diesel engine (1) using low-quality fuel such as fuel oil containing high-concentration sulfur components, the exhaust gas purification equipment comprising:

a PM-free scrubber (4) disposed in an exhaust pipe connected to an exhaust manifold (2) of the engine, **characterized in that** the PM-free scrubber (4) removes no PM contained in exhaust gas by utilizing a difference in diffusion speed between gas and particles and because the exhaust gas does not fiercely collide with a surface of a thin-film layer formed of treatment water (W) which is always supplied to flow down along each of wall surfaces constituting the PM-free scrubber (4), but smoothly flows along near the surface of the water thin-film layer; and
an SCR (3) disposed on the downstream side of the PM-free scrubber (4) that removes no the PM.

8. The exhaust gas purification equipment for a marine diesel engine (1) using low-quality fuel such as fuel oil containing high-concentration sulfur components according to claim 7, further comprising:
an electric precipitation means for removing the PM, disposed on the upstream side of the PM-free scrubber (4).

9. The exhaust gas purification equipment for a marine diesel engine using low-quality fuel such as fuel oil containing high-concentration sulfur components according to claim 7 or 8, further comprising:

a branching part for causing part of the exhaust gas to branch as EGR gas, disposed on an exhaust pipe on an upstream side of the PM-free scrubber (4), on the downstream side of the PM-free scrubber (4), or an upstream side of the SCR (3);
wherein the EGR gas is recirculated to intake air of the engine through an EGR piping system connected to the branching part.

10. The exhaust gas purification equipment for a marine diesel engine (1)using low-quality fuel such as fuel oil containing high-concentration sulfur components according to claim 9, further comprising:
a sub-PM-free scrubber (4b) disposed in the EGR piping system, the sub-PM-free scrubber (4b) removing no PM contained in the EGR gas by utilizing a difference in diffusion speed between gas and particles and because the exhaust gas does not fiercely collide with a surface of a thin-film layer formed of treatment water which is always supplied to flow down along each of wall surfaces constituting the sub-PM-free scrubber (4b), but smoothly flows along near the surface of the water thin-film layer.

11. The exhaust gas purification equipment for a marine diesel engine (1) using low-quality fuel such as fuel oil containing high-concentration sulfur components according to claim 10, further comprising:
the electric precipitation means for removing the PM, disposed in the EGR piping system on an upstream side of the sub-PM-free scrubber (4b).

12. The exhaust gas purification equipment for a marine diesel engine (1) using low-quality fuel such as fuel oil containing high-concentration sulfur components according to any one of claims 1 to 11, further comprising:

a heating device (7) for heating the exhaust gas, disposed on the upstream side of the SCR (3).

**Patentansprüche**

1. Abgasreinigungseinrichtung für einen Schiffsdieselmotor (1), der minderwertigen Kraftstoff wie Schwefelkomponenten in hoher Konzentration enthaltendes Schweröl verwendet, wobei die Abgasreinigungseinrichtung umfasst:

   eine Vorrichtung zur selektiven katalytischen Reduktion (3) (im Folgenden als "SCR" bezeichnet), die in einem Abgasrohr installiert, ist, das mit einem Abgaskrümmer (2) des Motors verbunden ist; und
   einen PM-freien Gaswäscher (4), der an einer stromabwärtigen Seite der SCR (3) angeordnet ist, **dadurch gekennzeichnet, dass** der PM-freie Gaswäscher (4) keine partikelförmige Materie (im Folgenden als "PM" bezeichnet) entfernt, die hauptsächlich aus Kohlenstoff besteht und in dem Abgas enthalten ist, indem ein Unterschied in der Diffusionsgeschwindigkeit zwischen Gas und Partikeln genutzt wird und da das Abgas nicht heftig mit einer Oberfläche einer Dünnfilmschicht kollidiert, die aus Behandlungswasser (W) gebildet wird, das immer bereitgestellt wird, um entlang von jeder der Wandoberflächen, die den PM-freien Gaswäscher (4) darstellen, nach unten zu strömen, sondern reibungslos entlang der Nähe der Oberfläche der Wasser-Dünnfilmschicht strömt.

2. Abgasreinigungseinrichtung für einen Schiffsdieselmotor (1), der minderwertigen Kraftstoff wie Schwefelkomponenten in hoher Konzentration enthaltendes Schweröl verwendet, nach Anspruch 1, ferner umfassend:
   ein elektrisches Abscheidungsmittel (8) zum Entfernen der PM, das an einer stromaufwärtigen Seite entweder der SCR (3) oder des PM-freien Gaswäschers (4) angeordnet ist.

3. Abgasreinigungseinrichtung für einen Schiffsdieselmotor (1), der minderwertigen Kraftstoff wie Schwefelkomponenten in hoher Konzentration enthaltendes Schweröl verwendet, nach Anspruch 1 oder 2, ferner umfassend:

   einen Abzweigungsteil zum Veranlassen eines Teils des Abgases, als AGR-Gas abzuzweigen, der an einem Abgasrohr an einer stromaufwärtigen Seite der SCR (3), an der stromabwärtigen Seite der SCR (3) oder an einer stromabwärtigen Seite des PM-freien Gaswäschers (4) angeordnet ist,
   wobei das AGR-Gas durch ein AGR-Rohrleitungssystem, das mit dem Abzweigungsteil verbunden ist, zur Ansaugluft des Motors (1) zurückgeführt wird.

4. Abgasreinigungseinrichtung für einen Schiffsdieselmotor (1), der minderwertigen Kraftstoff wie Schwefelkomponenten in hoher Konzentration enthaltendes Schweröl verwendet, nach Anspruch 3, ferner umfassend:
   einen sub-PM-freien Gaswäscher (4b), der in dem AGR-Rohrleitungssystem angeordnet ist, wobei der sub-PM-freie Gaswäscher (4b) keine PM entfernt, die in dem AGR-Gas enthalten ist, indem ein Unterschied in der Diffusionsgeschwindigkeit zwischen Gas und Partikeln genutzt wird und da das Abgas nicht heftig mit einer Oberfläche einer Dünnfilmschicht kollidiert, die aus Behandlungswasser (W) gebildet wird, das immer bereitgestellt wird, um entlang von jeder der Wandoberflächen, die den sub-PM-freien Gaswäscher (4b) darstellen, nach unten zu strömen, sondern reibungslos entlang der Nähe der Oberfläche der Wasser-Dünnfilmschicht strömt.

5. Abgasreinigungseinrichtung für einen Schiffsdieselmotor (1), der minderwertigen Kraftstoff wie Schwefelkomponenten in hoher Konzentration enthaltendes Schweröl verwendet, nach Anspruch 3 oder 4, wobei das elektrische Abscheidungsmittel zum Entfernen der PM in dem Abgasrohr an der stromaufwärtigen Seite der SCR (3) angeordnet ist.

6. Abgasreinigungseinrichtung für einen Schiffsdieselmotor (1), der minderwertigen Kraftstoff wie Schwefelkomponenten in hoher Konzentration enthaltendes Schweröl verwendet, nach Anspruch 4, wobei das elektrische Abscheidungsmittel zum Entfernen der PM in dem AGR-Rohrleitungssystem an einer stromaufwärtigen Seite des Abgasrohrs des sub-PM-freien Gaswäschers (4b) angeordnet ist.

7. Abgasreinigungseinrichtung für einen Schiffsdieselmotor (1), der minderwertigen Kraftstoff wie Schwefelkomponenten in hoher Konzentration enthaltendes Schweröl verwendet, wobei die Abgasreinigungseinrichtung umfasst:

   einen PM-freien Gaswäscher (4), der in einem Abgasrohr angeordnet ist, das mit einem Abgaskrümmer (2) des Motors verbunden ist, **dadurch gekennzeichnet, dass** der PM-freie Gaswäscher (4) keine PM entfernt, die in dem Abgas enthalten ist, indem ein Unterschied in der Diffusionsgeschwindigkeit zwischen Gas und Partikeln genutzt wird und da das Abgas nicht heftig mit einer Oberfläche einer Dünnfilmschicht kollidiert, die aus Behandlungswasser (W) gebildet wird, das immer bereitgestellt wird, um entlang von jeder der Wandoberflächen, die den PM-freien Gaswäscher (4) darstellen, nach unten zu strömen, sondern reibungslos entlang der Nähe der Oberfläche der Wasser-Dünnfilmschicht strömt; und

eine SCR (3), die an der stromabwärtigen Seite des PM-freien Gaswäschers (4) angeordnet ist, der keine PM entfernt.

8. Abgasreinigungseinrichtung für einen Schiffsdieselmotor (1), der minderwertigen Kraftstoff wie Schwefelkomponenten in hoher Konzentration enthaltendes Schweröl verwendet, nach Anspruch 7, ferner umfassend:
ein elektrisches Abscheidungsmittel zum Entfernen der PM, das an der stromaufwärtigen Seite des PM-freien Gaswäschers (4) angeordnet ist.

9. Abgasreinigungseinrichtung für einen Schiffsdieselmotor (1), der minderwertigen Kraftstoff wie Schwefelkomponenten in hoher Konzentration enthaltendes Schweröl verwendet, nach Anspruch 7 oder 8, ferner umfassend:

einen Abzweigungsteil zum Veranlassen eines Teils des Abgases, als AGR-Gas abzuzweigen, der an einem Abgasrohr an einer stromaufwärtigen Seite des PM-freien Gaswäschers (4), an der stromabwärtigen Seite des PM-freien Gaswäschers (4) oder an einer stromaufwärtigen Seite der SCR (3) angeordnet ist;
wobei das AGR-Gas durch ein AGR-Rohrleitungssystem, das mit dem Abzweigungsteil verbunden ist, zur Ansaugluft des Motors zurückgeführt wird.

10. Abgasreinigungseinrichtung für einen Schiffsdieselmotor (1), der minderwertigen Kraftstoff wie Schwefelkomponenten in hoher Konzentration enthaltendes Schweröl verwendet, nach Anspruch 9, ferner umfassend:
einen sub-PM-freien Gaswäscher (4b), der in dem AGR-Rohrleitungssystem angeordnet ist, wobei der sub-PM-freie Gaswäscher (4b) keine PM entfernt, die in dem AGR-Gas enthalten ist, indem ein Unterschied in der Diffusionsgeschwindigkeit zwischen Gas und Partikeln genutzt wird und da das Abgas nicht heftig mit einer Oberfläche einer Dünnfilmschicht kollidiert, die aus Behandlungswasser gebildet wird, das immer bereitgestellt wird, um entlang von jeder der Wandoberflächen, die den sub-PM-freien Gaswäscher (4b) darstellen, nach unten zu strömen, sondern reibungslos entlang der Nähe der Oberfläche der Wasser-Dünnfilmschicht strömt.

11. Abgasreinigungseinrichtung für einen Schiffsdieselmotor (1), der minderwertigen Kraftstoff wie Schwefelkomponenten in hoher Konzentration enthaltendes Schweröl verwendet, nach Anspruch 10, ferner umfassend:
das elektrische Abscheidungsmittel zum Entfernen der PM, das in dem AGR-Rohrleitungssystem an einer stromaufwärtigen Seite des sub-PM-freien Gaswäschers (4b) angeordnet ist.

12. Abgasreinigungseinrichtung für einen Schiffsdieselmotor (1), der minderwertigen Kraftstoff wie Schwefelkomponenten in hoher Konzentration enthaltendes Schweröl verwendet, nach einem der Ansprüche 1 bis 11, ferner umfassend:
eine Heizvorrichtung (7) zum Erhitzen des Abgases, die an der stromaufwärtigen Seite der SCR (3) angeordnet ist.

**Revendications**

1. Dispositif d'épuration de gaz d'échappement pour un moteur diesel marin (1) utilisant un carburant de basse qualité tel qu'une huile lourde contenant une concentration élevée de composants soufrés, le dispositif d'épuration de gaz d'échappement comprenant :

un dispositif de réduction catalytique sélective (3) (ci-après « SCR ») installé dans une conduite d'échappement reliée à un collecteur d'échappement de moteur (2) ; et
un épurateur dépourvu de PM (4) disposé sur un côté aval du SCR (3), **caractérisé en ce que** l'épurateur dépourvu de PM (4) : n'élimine pas les matières particulaires (ci-après, « PM ») principalement composées de carbone et contenues dans le gaz d'échappement en utilisant une différence de vitesse de diffusion entre le gaz et les particules et parce que le gaz d'échappement ne heurte pas violemment une surface d'une couche de film mince formée d'eau de traitement (W) qui reste fournie en permanence pour s'écouler le long de chacune des surfaces de paroi constituant l'épurateur dépourvu de PM (4), mais s'écoule régulièrement le long de la proximité de la surface de la couche de film mince d'eau.

2. Dispositif d'épuration de gaz d'échappement pour un moteur diesel marin (1) utilisant un carburant de basse qualité tel qu'une huile lourde contenant une concentration élevée de composants soufrés selon la revendication 1, comprenant en outre :
un moyen de précipitation électrique (8) pour éliminer les PM, disposé sur un côté amont du SCR (3) ou de l'épurateur dépourvu de PM (4).

3.  Dispositif d'épuration de gaz d'échappement pour un moteur diesel marin (1) utilisant un carburant de basse qualité tel qu'une huile lourde contenant une concentration élevée de composants soufrés selon la revendication 1 ou 2, comprenant en outre :

    une partie de dérivation pour permettre la dérivation d'une partie du gaz d'échappement en tant que gaz d'EGR, disposée sur une conduite d'échappement sur un côté amont du SCR (3), sur le côté aval du SCR (3), ou sur un côté aval de l'épurateur sans PM (4),
    dans lequel le gaz d'EGR est remis en circulation vers l'air d'entrée du moteur (1) par un système de conduite d'EGR relié à la partie de dérivation.

4.  Dispositif d'épuration de gaz d'échappement pour un moteur diesel marin (1) utilisant un carburant de basse qualité tel qu'une huile lourde contenant une concentration élevée de composants soufrés selon la revendication 3, comprenant en outre :
    un épurateur dépourvu de PM secondaire (4b) disposé dans le système de conduite d'EGR, l'épurateur dépourvu de PM secondaire (4b) n'éliminant pas les PM contenues dans le gaz d'EGR en utilisant une différence de vitesse de diffusion entre le gaz et les particules et parce que le gaz d'échappement ne heurte pas violemment une surface d'une couche de film mince formée d'eau de traitement (W) qui reste fournie en permanence pour s'écouler le long de chacune des surfaces de paroi constituant l'épurateur dépourvu de PM secondaire (4b), mais s'écoule régulièrement le long de la proximité de la surface de la couche de film mince d'eau.

5.  Dispositif d'épuration de gaz d'échappement pour un moteur diesel marin (1) utilisant un carburant de basse qualité tel qu'une huile lourde contenant une concentration élevée de composants soufrés selon la revendication 3 ou 4, dans lequel le moyen de précipitation électrique pour éliminer les PM est disposé dans la conduite d'échappement sur le côté amont du SCR (3).

6.  Dispositif d'épuration de gaz d'échappement pour un moteur diesel marin (1) utilisant un carburant de basse qualité tel qu'une huile lourde contenant une concentration élevée de composants soufrés selon la revendication 4, dans lequel le moyen de précipitation électrique pour éliminer les PM est disposé dans le système de conduite d'EGR sur un côté amont de la conduite d'échappement de l'épurateur dépourvu de PM secondaire (4b).

7.  Dispositif d'épuration de gaz d'échappement pour un moteur diesel marin (1) utilisant un carburant de basse qualité tel qu'une huile lourde contenant une concentration élevée de composants soufrés, le dispositif d'épuration de gaz d'échappement comprenant :

    un épurateur dépourvu de PM (4) disposé dans une conduite d'échappement reliée à un collecteur d'échappement (2) du moteur, **caractérisé en ce que** l'épurateur dépourvu de PM (4) : n'élimine pas les PM contenues dans le gaz d'échappement en utilisant une différence de vitesse de diffusion entre le gaz et les particules et parce que le gaz d'échappement ne heurte pas violemment une surface d'une couche de film mince formée d'eau de traitement (W) qui reste fournie en permanence pour s'écouler le long de chacune des surfaces de paroi constituant l'épurateur dépourvu de PM (4), mais s'écoule régulièrement le long de la proximité de la surface de la couche de film mince d'eau ; et
    un SCR (3) disposé sur le côté aval de l'épurateur dépourvu de PM (4) qui n'élimine pas les PM.

8.  Dispositif d'épuration de gaz d'échappement pour un moteur diesel marin (1) utilisant un carburant de basse qualité tel qu'une huile lourde contenant une concentration élevée de composants soufrés selon la revendication 7, comprenant en outre :
    un moyen de précipitation électrique pour éliminer les PM, disposé sur le côté amont de l'épurateur dépourvu de PM (4).

9.  Dispositif d'épuration de gaz d'échappement pour un moteur diesel marin utilisant un carburant de basse qualité tel qu'une huile lourde contenant une concentration élevée de composants soufrés selon la revendication 7 ou 8, comprenant en outre :

    une partie de dérivation pour permettre la dérivation d'une partie du gaz d'échappement en tant que gaz d'EGR, disposée sur une conduite d'échappement sur un côté amont de l'épurateur dépourvu de PM (4), sur le côté aval de l'épurateur dépourvu de PM (4), ou sur un côté amont du SCR (3) ;

dans lequel le gaz d'EGR est remis en circulation vers l'air d'entrée du moteur par un système de conduite d'EGR relié à la partie de dérivation.

10. Dispositif d'épuration de gaz d'échappement pour un moteur diesel marin (1) utilisant un carburant de basse qualité tel qu'une huile lourde contenant une concentration élevée de composants soufrés selon la revendication 9, comprenant en outre :

un épurateur dépourvu de PM secondaire (4b) disposé dans le système de conduite d'EGR, l'épurateur dépourvu de PM secondaire (4b) n'éliminant pas les PM contenues dans le gaz d'EGR en utilisant une différence de vitesse de diffusion entre le gaz et les particules et parce que le gaz d'échappement ne heurte pas violemment une surface d'une couche de film mince formée d'eau de traitement qui reste fournie en permanence pour s'écouler le long de chacune des surfaces de paroi constituant l'épurateur dépourvu de PM secondaire (4b), mais s'écoule régulièrement le long de la proximité de la surface de la couche de film mince d'eau.

11. Dispositif d'épuration de gaz d'échappement pour un moteur diesel marin (1) utilisant un carburant de basse qualité tel qu'une huile lourde contenant une concentration élevée de composants soufrés selon la revendication 10, comprenant en outre :

le moyen de précipitation électrique pour éliminer les PM, disposé dans le système de conduite d'EGR sur un côté amont de l'épurateur dépourvu de PM secondaire (4b) .

12. Dispositif d'épuration de gaz d'échappement pour un moteur diesel marin (1) utilisant un carburant de basse qualité tel qu'une huile lourde contenant une concentration élevée de composants soufrés selon l'une quelconque des revendications 1 à 11, comprenant en outre :

un dispositif de chauffage (7) pour chauffer le gaz d'échappement, disposé sur le côté amont du SCR (3).

# Fig.1

# Fig.2

Fig.3

Fig.4

Fig.5

Fig.6

Fig.7

Fig.8

Fig.9

Fig.10

Fig.11

Fig.12

## Fig.13

## Fig.14

Fig.15

Fig.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006064805 A
- JP 2013094390 A
- JP 2013188708 A

- WO 2010020684 A1
- EP 2653679 A1
- JP 2009050751 B

**Non-patent literature cited in the description**

- Countermeasure technique to IMO Tier III NOx Regulations and Remaining Problem'', 2-2 ''Countermeasure Engine Technique to IMO Tier III NOx regulations'', 2-2-2. *Exhaust Gas Circulation,* 14-16
- International Convention for Prevention of Pollution from Ships. *Regulation for prevention of pollution by oil,* 1973

- Wave of clean solutions. *Alfa Laval International Magazine,* 30 November 2011, 6-14
- Basics of Aerosol Science and Technology by Kanji Takahashi. Morikita Publishing Co., Ltd, 2004, 215